# EUROPEAN PATENT SPECIFICATION

(11) **EP 3 631 941 B1**
(45) Date of publication and mention of the grant of the patent: **24.02.2021**
(21) Application number: 17731074.5
(22) Date of filing: 26.05.2017
(51) Int. Cl.: H02J 7/02

(54) **COMMUNICATIONS SYSTEM FOR TRANSMISSION OF CONTROL SIGNALS TO A POWER ELECTRONICS MODULE**
KOMMUNIKATIONSSYSTEM ZUR ÜBERTRAGUNG VON STEUERSIGNALEN ZU EINEM LEISTUNGSELEKTRONIKMODUL
SYSTÈME DE COMMUNICATION POUR LA TRANSMISSION DE SIGNAUX DE COMMANDE À UN MODULE ÉLECTRONIQUE DE PUISSANCE

(43) Date of publication of application: 08.04.2020
(73) Proprietor: ABB Power Grids Switzerland AG, 5400 Baden (CH)
(72) Inventor: PANG, Zhibo, 722 4o Västerås (SE); DZUNG, Dacfey, 5430 Wettingen (CH)
(74) Representative: AWA Sweden AB
(86) International application number: PCT/EP2017/062727
(87) International publication number: WO 2018/215073

(56) References cited:
- WO-A1-2016/109327
- US-A1- 2010 315 045
- US-A1- 2016 267 781
- US-A1- 2017 047 968

## Description

### TECHNICAL FIELD

The present invention generally relates to the field of power electronics. Specifically, the present invention relates to a communication element and a communications system for transmission of at least one control signal to and/or reception of at least one message (e.g., comprising a status message, an alarm message and/or acknowledgement/negative acknowledgement (ACK/NACK) messages) from a power electronics module or a power electronics element.

### BACKGROUND

HVDC power transmission has become increasingly important due to increasing need for power supply or delivery and interconnected power transmission and distribution systems. In a HVDC power system there is generally included an interface arrangement including or constituting a HVDC converter station, which is a type of station configured to convert high voltage Direct Current (DC) to Alternating Current (AC), or vice versa. A HVDC converter station may comprise a plurality of elements such as the converter itself (or a plurality of converters connected in series or in parallel), one or more circuit breakers, transformers, capacitors, filters, and/or other auxiliary elements. Converters, which often are referred to as 'converter valves', or simply 'valves', may comprise a plurality of solid-state based devices such as semiconductor devices and may be categorized as line-commutated converters (LCCs) or voltage source converters (VSCs), e.g. depending on the type of switches (or switching devices) which are employed in the converter. A plurality of solid-state semiconductor devices such as Insulated-Gate Bipolar Transistors (IGBTs) may be connected together, for instance in series, to form a building block, or cell, of a HVDC converter, or HVDC converter valve. HVDC converter valves may be arranged indoors, in so called converter valve halls. Elements which for example may be included in a converter, such as switches or switching devices, circuit breakers, transformers, capacitors, filters, and/or other auxiliary elements, will in the following be referred to as power electronics components (PECs).

PECs, which for example may be included in converters, may be provided with communication means. Such communication means should preferably be robust and reliable and have a relatively low latency. PECs may not only be employed in HVDC applications but also in other applications, such as, for example, in AC power systems such as a so called flexible AC transmission system (FACTS). Operation of PECs, such as, for example, IGBTs, may be controlled by means of a control unit or controller by way of transmission of control signals, e.g., including switching commands or instructions, using multiple optical fiber (OF) communication links. The control unit may transmit the control signals to a power electronics module (PEM) which may include or be constituted by one or more PECs, and/or be communicatively coupled with the one or more PECs for controlling the one or more PECs. For example, the control unit may transmit the control signals directly to the one or more PECs, and/or the control unit may transmit the control signals to the PEM, which may then, based on the control signals received from the control unit, control the one or more PECs with which the PEM may be communicatively coupled. OF links may however be expensive to fabricate, install and maintain, and may have a shorter life time and a higher rate of failure as compared with the PECs. Alternative solutions in the form of wireless communication links for replacing OF communication links have been proposed. Wireless communication links may utilize radio frequency (RF) communication techniques or means. However, in case there is no direct line-of-sight between the control unit and the PEM (or PECs), for example due to components or obstacles being located between the control unit and the PEM (or PECs) such as metallic planes, dishes, columns, or beams, RF signals may be significantly distorted due to fading, reflection, and attenuation. This problem may become particularly pronounced in high voltage power systems comprising HVDC converters, high voltage circuit breakers, etc. This may make the use of wireless communication links between the control unit and PEM or PECs even more difficult. Also, the available space for installing RF transceivers may be limited, for example by the overall structure of the power electronics system which includes or is constituted by the PEM and/or PECs, which may make the situation even more challenging. Background art can be found in WO2016/109327 A1, US 2010/315045 A1, US 2016/267781 A1 or in US 2017/047968 A1.

### SUMMARY

In view of the above, a concern of the present invention is to facilitate employing one or more wireless communication links for communication between a control unit or controller and one or more PEMs or PECs, e.g., for facilitating controlling operation of the PEMs or PECs by means of transmission of control signals from the control unit or controller the one or more PEMs or PECs.

A further concern of the present invention is to achieve a relatively high reliability in communication between a control unit or controller and one or more PEMs or PECs wherein one or more wireless communication links are employed for communication between the control unit or controller and one or more PEMs or PECs.

The one or more wireless communication links may be included in a communications system for transmitting at least one control signal to at least one PEM and/or receiving at least one message from at least one PEM. The at least one message may for example include, but is not limited to, one or more of a status message (e.g., indicating an operational status of the at least one PEM), an alarm message (e.g., indicating that a maintenance action needs to be taken with respect to the at least one PEM), or acknowledgement/negative acknowledgement (ACK/NACK) messages. The communications system may in addition to the one or more wireless communication links also include one or more wired communication links. Thus, the communications system may be a hybrid communication network based on both wireless and wired communication links.

To address at least one of the above-mentioned concerns and other concerns, a communication element and a communications system in accordance with the independent claims are provided. Preferred embodiments are defined by the dependent claims.

Progress in the field of RF circuits and signal processing has enabled so-called (dynamic) beamforming. By means of beamforming, the radiation pattern of RF transmitters, or RF transceivers, may be adjusted even if the RF transmitters or transceivers are fixedly installed (i.e., non-movable). By means of beamforming, the directionality of the radiation pattern of a RF transmitter or RF transceiver may be controlled. The radiation pattern of RF transmitters or RF transceivers may for example be adjusted so as to adjust the orientation and/or width of, e.g., the main lobe of the RF transmitter's or RF transceiver's radiation pattern. By adjusting the radiation pattern of an RF transmitter or RF transceiver so as to adjust the orientation of the main lobe of the RF transmitter's or RF transceiver's radiation pattern, the orientation of the RF transmitter's or RF transceiver's radiation pattern with respect to one or more particular PEMs or PECs may be optimized, which may enable or facilitate achieving a relatively high reliability in communication between the RF transmitter or RF transceiver and the one or more PEMs or PECs. By adjusting the radiation pattern of an RF transmitter or RF transceiver so as to adjust the width of the main lobe of the RF transmitter's or RF transceiver's radiation pattern, the width of the RF transmitter's or RF transceiver's radiation pattern with respect to one or more particular PEMs or PECs may be optimized for example with respect to directionality. This may enable or facilitate achieving relatively low interference of the RF transmitter's or RF transceiver's radiation pattern with a radiation pattern of another RF transmitter or RF transceiver at respective, intended receivers, even if the receivers would be arranged relatively close to each other. This may facilitate or enable for two RF transmitters or RF transceivers to use the same frequency band, even if the respective, intended receivers would be arranged relatively close to each other, which in turn may facilitate or allow for having a relatively large number of RF transmitters or RF transceivers in the communications system. This may be advantageous for example in relatively large power electronics systems, wherein it may be desired for a single control unit or controller to transmit control signals to a relatively large number of PEMs or PECs, for example a thousand or several thousands of PEMs or PECs.

According to a first aspect there is provided a communication element for use in conjunction with a communications system for transmitting at least one control signal to and/or receiving at least one message from at least one power electronics module (PEM). The communication element and/or the at least one PEM may be part of, or included in, the communications system. The at least one power electronics module comprises a communication module which is capable of wireless communication and configured to receive and/or transmit at least one signal. The communication element comprises a plurality of antennas capable of wireless communication. Each of the plurality of antennas is configured to transmit and/or receive at least one signal using at least one (possibly controllable) antenna weight (or antenna parameter; e.g., an antenna transmit weight and/or an antenna receive weight). The communication element comprises a processor. The processor is communicatively coupled with each of the plurality of antennas. The processor is configured to, for each of the plurality of antennas, control the phase and/or amplitude of the at least one signal transmitted and/or received by the antenna using the at least one antenna weight in accordance with at least one beamforming method, or beamforming algorithm or beamforming process. The communication element is configured to transmit the at least one control signal to and/or receive the at least one message from the at least one PEM by means of the plurality of antennas in accordance with the at least one beamforming method. For example, the communication element may be configured to transmit the at least one control signal to and/or receive the at least one message from the at least one PEM by means of the plurality of antennas in accordance with the at least one beamforming method by means of a combination of the at least one signal transmitted or received, respectively, by the respective ones of the plurality of antennas.

For example, each or any of the plurality of antennas may be configured to transmit and/or receive at least one signal using a (possibly controllable) antenna transmit or receive phase weight, respectively, and a (possibly controllable) antenna transmit or receive amplitude weight, respectively. In the following, "antenna weight", or "antenna amplitude weight" or "antenna phase weight", may refer to one or both of the cases where the antenna weight is for transmission or reception. The processor may be configured to, for each of the plurality of antennas, control the phase and/or amplitude of the at least one signal transmitted and/or received by the antenna using the at least one antenna amplitude weight and/or the antenna phase weight in accordance with the at least one beamforming method.

Thus, in accordance with the first aspect, transmission of one or more control signals (or in alternative or additionally, any other type of signal) to and/or receipt of at least one message (and/or signal) from at least one PEM may be carried out using wireless communication and employing so-called (dynamic) beamforming. The processor of the communication element may include one or more signal processing circuits configured to execute the at least one beamforming method. By means of the communication element being configured to transmit the at least one control signal to and/or receive the at least one message from the at least one PEM by means of the plurality of antennas in accordance with the at least one beamforming method, the directionality of the radiation pattern of the communication element may be controlled. The radiation pattern of the communication element may for example be adjusted so as to adjust the orientation and/or width of, e.g., the main lobe of the communication element's radiation pattern.

By adjusting the communication element's radiation pattern so as to adjust the orientation of the main lobe of the communication element's radiation pattern, the orientation of the communication element's radiation pattern with respect to the at least one PEM may be optimized, which may enable or facilitate achieving a relatively high reliability in communication between the communication element and the at least one PEM. By adjusting the communication element's radiation pattern so as to adjust the width of the main lobe of the communication element's radiation pattern, the width of the communication element's radiation pattern with respect to the at least one PEM may be optimized for example with respect to directionality. This may enable or facilitate achieving relatively low interference of the communication element's radiation pattern with a radiation pattern of another communication element that may be included in the communications system at different PEMs which may be intended to receive communications from the different communication elements, even if the PEMs would be arranged relatively close to each other. This may facilitate or enable for two communication elements to use the same, or substantially the same, frequency band, for example even if the different PEMs which may be intended to receive communications from the different communication elements would be arranged relatively close to each other. In turn, this may facilitate or allow for having a relatively large number of communication elements as well as PEMs in the communications system. This may be advantageous for example in relatively large power electronics systems, wherein it may be desired or even required for a control unit or controller to transmit control signals to and/or receive messages from a relatively large number of PEMs, for example a thousand or even several thousands of PEMs.

As mentioned in the foregoing, the at least one message may for example include, but is not limited to, one or more of a status message, an alarm message, or ACK/NACK messages.

In the context of the present application, the term beamforming also encompasses so called beam steering. The at least one beamforming method, algorithm or process may for example comprise, utilize or be based on one or more beamforming or beam steering methods as known in the art, such as, for example, adaptive beamforming, phase array beamforming, fixed or switched beam beamforming, and/or one or more beamforming techniques used in cellular phone standards (e.g., Transmit antenna array (TxAA) beamforming, multiple-input-multiple-output (MIMO) precoding based beamforming, etc.).

The plurality of antennas of the communication element may for example include or be constituted by a so called phased antenna array.

The communication element may be selectively triggered into or out of a beamforming transmission and/or reception mode, wherein when the communication element is in the beamforming transmission and/or reception mode, the communication element is configured to transmit the at least one control signal to and/or receive the at least one message from the at least one PEM by means of the plurality of antennas in accordance with the at least one beamforming method, as described in the foregoing, while when the communication element is not in the beamforming transmission and/or reception mode, the communication element is configured to transmit the at least one control signal to and/or receive the at least one message from the at least one PEM without employing beamforming.

One or more of the plurality of antennas may for example comprise one or more radio frequency (RF) antennas. The RF antennas may for example be configured to operate within a frequency range between (about) 3 kHz and (about) 300 kHz, but are not limited thereto, and one or more of the RF antennas could be configured to operate at lower or higher frequencies (possibly outside the RF frequency range).

The communications system may comprise at least one control unit, or controller. The control unit may be configured to generate at least one control signal for and/or process at least one message from the at least one PEM. The at least one control unit may comprise a communication module configured to transmit the at least one control signal and/or receive the at least one message. The communication module of the at least one control unit may be capable of wired and/or wireless communication.

The communication element may comprise a communication module configured to receive the at least one control signal transmitted by the at least one control unit. The communication module of the communication element may be capable of wired and/or wireless communication. The communication element may be configured to transmit the received at least one control signal to the at least one PEM and/or receive the at least one message from the at least one PEM by means of the plurality of antennas of the communication element in accordance with the at least one beamforming method.

Thus, the communication element may exhibit functionality similar to a relay, wherein the at least one control signal for the at least one PEM generated by the at least one control unit may be received by the communication element and subsequently forwarded to the at least one PEM by the communication element (possibly via one or more intermediate entities in the communications system), and wherein the at least one message from the at least one PEM may be received by the communication element and subsequently forwarded to the at least one control unit. In alternative, the communication element itself may be configured to generate at least one control signal for the at least one PEM, and the communication element may hence in accordance with one or more embodiments of the present invention be considered as a control unit.

In the context of the present application, by a power electronics module (PEM) it may be meant in principle any element, module, unit, etc., including one or more power electronics components (PECs), for example comprising solid-state semiconductor devices or power semiconductor components such as Insulated-Gate Bipolar Transistors (IGBTs). In alternative or in addition, by a PEM it may be meant an element, module, unit, etc., which may be communicatively coupled with one or more PECs, for example comprising solid-state semiconductor devices or power semiconductor components such as IGBTs, and which element, module, unit, etc., may be configured to control operation of the one or more PECs, e.g., based on the at least one control signal which the PEM may receive via the communications system.

The at least one PEM may for example be comprised in at least one converter (e.g., an HVDC converter). According to one or more embodiments of the present invention, the at least one control unit may hence be configured to control at least one converter. A converter, e.g., an HVDC converter, may comprise at least one controller for controlling operation of any PEC(s) comprised in the converter. According to one or more embodiments of the present invention, the at least one PEM may comprise one or more PECs, and the at least one control unit may comprise a controller for controlling operation of the one or more PECs. Thus, according to one or more embodiments of the present invention, the communications system may possibly be for communication within a converter.

Modules, or building blocks or cells, of converters may be on relatively high electric potential with respect to ground potential, for example 1 kV or more, possibly up to 30 kV or even more.

By the at least one PEM comprising the communication module which is capable of wireless communication and by the communication element comprising the plurality of antennas capable of wireless communication, galvanic separation between the at least one PEM (which, as mentioned in the foregoing, for example may comprise or be constituted by one or more converter modules) and the communication module and possibly one or more other components, such as, for example, the at least one control unit, may be facilitated or even enabled.

In the context of the present application, by a communicatively coupling of two or more entities it is meant that the two or more entities are coupled so as to be capable of communicating with each other using wireless communication and/or wired communication.

In the context of the present application, by wireless communication it is meant in principle any type of communication means or technique utilizing one or more wireless techniques or means for effecting communication, such, as for example, radio frequency (RF) communication and/or an infrared communication (e.g., employing infrared light) or another type of free-space optical communication (e.g., based on laser).

Further in the context of the present application, by wired communication it is meant in principle any type of communication means or technique utilizing one or more non-wireless techniques or means for effecting communication, such, as for example, communication using at least one optical waveguide, or optical transmission line (e.g., an optical fiber), and/or at least one electrical conductor (e.g., a cable or wire, e.g., a copper conductor or cable, or copper wire). Alternatively, "wired communication" could be described as "non-wireless communication", which communication hence may employ, for example, at least one optical waveguide, or optical transmission line, such as an optical fiber, and/or at least one cabling or wiring.

As mentioned in the foregoing, the communications system may comprise at least one control unit, or controller, which may be configured to generate at least one control signal for and/or process at least message from the at least one PEM. The at least one control unit may comprise a communication module which may be configured to transmit the at least one control signal and/or receive the at least one message.

The communication element may comprise a communication module, which may be configured to receive the at least one control signal transmitted by the at least one control unit. The communication element may be configured to transmit the received at least one control signal to the at least one PEM and/or receive the at least one message from the at least one PEM by means of the plurality of antennas of the communication element in accordance with the at least one beamforming method, such as described in the foregoing.

Possibly, the communication module of the communication element may include or be constituted by the plurality of antennas and possibly also the processor. The at least one control signal transmitted by the at least one control unit may be received by the communication module by means of the plurality of antennas of the communication module. Thus, the plurality of antennas of the communication module may be configured to receive the at least one control signal transmitted by the at least one control unit.

The plurality of antennas may be configured to receive the at least one control signal transmitted by the at least one control unit using at least one antenna (receive) weight. Possibly, the plurality of antennas may be configured to receive the at least one control signal transmitted by the at least one control unit using a (receive) beamforming method or algorithm. The at least one antenna (receive) weight may for example comprise an antenna (receive) phase weight and an antenna (receive) amplitude weight.

The communication module of the communication element may be configured to receive at least one signal.

The at least one beamforming method may use at least one beamforming parameter, which at least one beamforming parameter may be variable, or adjustable. The processor may be configured to, for each of the plurality of antennas, control the phase and/or the amplitude of the at least one signal transmitted and/or received by the antenna using the at least one antenna weight (e.g., using the antenna transmit phase weight and the antenna transmit amplitude weight) in accordance with at least one beamforming method, and using the at least one beamforming parameter. The communication element may be configured to transmit the at least one control signal to and/or receive the at least one message from the at least one PEM by means of the plurality of antennas in accordance with the at least one beamforming method, using the at least one beamforming parameter.

The communication element may be configured to carry out a calibration process for adjusting the at least one beamforming parameter.

For carrying out the calibration process, the communication element may be configured to transmit a calibration signal to the at least one PEM by means of the plurality of antennas in accordance with the at least one beamforming method using the at least one beamforming parameter, and in response to the transmitted calibration signal, receive a calibration response signal from the at least one PEM by means of the communication module (or the plurality of antennas). The calibration response signal may include a measure or indication of quality of a communication link between the communication element and the at least one PEM. The communication element may be configured to determine that the calibration response signal is from the at least one PEM for example by some identifier (e.g., an address) of the at least one PEM which may be included in the calibration response signal. The communication element may be configured to adjust the at least one beamforming parameter based on the calibration response signal, for example based on the measure of quality of the communication link between the communication element and the at least one PEM included in the calibration response signal. The adjusted (or calibrated) at least one beamforming parameter may then be used for the communication element to transmit the at least one control signal to the at least one power electronics module by means of the plurality of antennas in accordance with the at least one beamforming method.

In case there are several PEMs (which may be included in the communications system) the calibration process may be carried out by the communication element with respect to each or at least some of the PEMs for example successively in a predefined order of the PEMs, or the calibration process may be carried out by the communication element in parallel or concurrently with respect to each or at least some of the PEMs.

The calibration process may for example start with the at least one (e.g., initial) beamforming parameter being selected from a previously used at least one beamforming parameter. This may particularly useful for example in case the calibration process would be carried out after any malfunction or outage in the communications system.

The measure of quality of a communication link between the communication element and the at least one PEM may for example include or be constituted by a measure of the receive signal strength at the at least one PEM and/or an error rate of the communication link between the communication element and the at least one PEM. Thus, the calibration response signal may include one or more of a measure of the receive signal strength at the at least one PEM, or an error rate of the communication link between the communication element and the at least one PEM. The error rate of the communication link between the communication element and the at least one PEM may for example include or be constituted by a packet error rate and/or a bit error rate. Other measures of quality of a communication link between the communication element and the at least one PEM are however possible.

The communication element may be configured to repeatedly (e.g., iteratively) carry out the above-mentioned actions for carrying out the calibration process, for example until the quality of the communication link between the communication element and the at least one PEM is sufficient.

For example, the communication element may be configured to repeatedly (i) transmit a calibration signal to the at least one PEM by means of the plurality of antennas in accordance with the at least one beamforming method using the adjusted at least one beamforming parameter, and in response to the transmitted calibration signal, (ii) receive a calibration response signal from the at least one PEM by means of the communication module (or the plurality of antennas), the calibration response signal including a measure of quality (e.g., a value indicative of quality) of the communication link between the communication element and the at least one power electronics module, and (iii) adjust the at least one beamforming parameter based on the calibration response signal. The actions (i), (ii) and (iii) may be carried out until a difference between the measure of quality included in the calibration response signal and the measure of quality of the communication link included in the previously received calibration response signal is below a threshold value. In alternative or in addition, the actions (i), (ii) and (iii) may be carried out until a selected number of rounds of the actions (i), (ii) and (iii) has been carried out.

The communication element may comprise a memory configured to store the at least one beamforming parameter (e.g., after the calibration process has been carried out) and/or any other data or parameters. The memory may comprise a non-volatile memory. The memory may be comprised in the processor.

The at least one beamforming parameter may for example comprise: the at least one antenna weight of the plurality of antennas (e.g., the antenna transmit amplitude weight and/or the antenna transmit phase weight of the plurality of antennas), a frequency of the communication link between the communication element and the at least one PEM, and/or a bandwidth of the communication link between the communication element and the at least one PEM. Other beamforming parameters are however possible.

The communication element may for example be configured to carry out the calibration process for adjusting the at least one beamforming parameter prior to transmitting the at least one control signal to and/or receiving the at least one message from the at least one PEM by means of the plurality of antennas in accordance with the at least one beamforming method. Thus, the calibration process may for example be performed prior to the communications system is put into actual operation mode wherein control signals are communicated to the at least one PEM, e.g., for controlling operation thereof, and/or messages are received from the at least one PEM.

In alternative or in addition, the communication element may be triggered to carry out the calibration process for adjusting the at least one beamforming parameter based on one or more selected events or conditions.

For example, the communication element may be configured to carry out the calibration process for adjusting the at least one beamforming parameter responsive to a determination (e.g., by the communication element, or the processor thereof) that a measure of a communication reliability (e.g., a value indicative of communication reliability) of the communication link between the communication element and the at least one power electronics module is below a threshold value.

The communication element may be configured to continuously or continually determine the measure of a communication reliability of the communication link between the communication element and the at least one power electronics module, and compare the measure with the threshold value.

The measure of a communication reliability of the communication link between the communication element and the at least one PEM may for example be monitored in real-time, or substantially in real-time, by means of exchanging of messages, packets, etc., between the communication element and the at least one PEM using the communication link therebetween, the messages, packets, etc., indicating a measure of a communication reliability of the communication link. There may for example be some time slot or bandwidth of the communication link between the communication element and the at least one PEM reserved or dedicated for such exchange, which may facilitate ensuring that any other communication between the communication element and the at least one PEM is not interrupted or even affected by such exchange.

The measure of a communication reliability of the communication link between the communication element and the at least one PEM may for example include latency of the communication link and/or an error rate of the communication link. The error rate of the communication link may for example include or be constituted by a packet error rate and/or a bit error rate.

The adjusted (or calibrated) at least one beamforming parameter may possibly be used also for the communication element to transmit at least one control signal to and/or receive at least one message from one or more other PEMs by means of the plurality of antennas in accordance with the at least one beamforming method. Thus, the at least one beamforming parameter may be determined (or calibrated) such as described in the foregoing, and then be used for transmission to and/or reception from each PEM of a group of PEMs. For the other PEM(s) in the group of PEMs, the calibration process may hence not be carried out.

The communications system may be for transmitting at least one control signal to and/or receiving at least one message from a plurality of PEMs, wherein the above-mentioned at least one PEM is one of the plurality of PEMs. The adjusted at least one beamforming parameter, obtained by the calibration process for the communication element to transmit the at least one control signal to and/or receive the at least one message from the at least one PEM by means of the plurality of antennas in accordance with the at least one beamforming method, using the at least one beamforming parameter, may be used also for the communication element to transmit (the) at least one control signal to and/or receive (the) at least one message from one or more other ones of the plurality of PEMs by means of the plurality of antennas, in accordance with the at least one beamforming method.

The one or more other ones of the plurality of PEMs may for example be PEMs that are arranged relatively close to the at least one PEM for which the adjusted at least one beamforming parameter was obtained by the calibration process. Accordingly, the adjusted at least one beamforming parameter obtained by the calibration process may be used also for the communication element to transmit the at least one control signal to and/or receive the at least one message from one or more other ones of the plurality of PEMs by means of the plurality of antennas in accordance with the at least one beamforming method only on a condition that the one or more other ones of the plurality of PEMs are within a selected distance from the at least one PEM (for which the adjusted at least one beamforming parameter was obtained by the calibration process). Thus, the communication element may use the adjusted at least one beamforming parameter obtained by the calibration process to transmit at least one control signal to and/or receive at least one message from both the at least one PEM (for which the adjusted at least one beamforming parameter was obtained by the calibration process) and one or more other PEMs which are neighboring the at least one PEM.

According to a second aspect, there is provided a communications system. The communications system comprises at least one power electronics module (PEM) and at least one communication element. The at least one PEM comprises a communication module capable of wireless communication. The communication module is configured to receive and/or transmit at least one signal. The at least one PEM is configured to receive at least one control signal and/or transmit at least one message via the communications system. The at least one communication element comprises a plurality of antennas configured for wireless communication. Each of the plurality of antennas is configured to transmit at least one signal using a at least one (possibly controllable) antenna weight. The at least one communication element comprises a processor. The processor is communicatively coupled with each of the plurality of antennas. The processor is configured to, for each of the plurality of antennas, control the phase and/or the amplitude of the at least one signal transmitted and/or received by the antenna using the at least one antenna weight in accordance with at least one beamforming method. The at least one communication element is configured to transmit the at least one control signal to and/or receive the at least one message from the at least one PEM by means of the plurality of antennas in accordance with the at least one beamforming method.

For example, the at least one communication element may be configured to transmit the at least one control signal to and/or receive the at least one message from the at least one PEM by means of the plurality of antennas in accordance with the at least one beamforming method by means of a combination of the at least one signal transmitted or received, respectively, by the respective ones of the plurality of antennas.

As mentioned in the foregoing, the at least one message may for example include, but is not limited to, one or more of a status message, an alarm message, or ACK/NACK messages.

For example, each or any of the plurality of antennas of the at least one communication element may be configured to transmit and/or receive at least one signal using a (possibly controllable) antenna phase weight and a (possibly controllable) antenna amplitude weight. The processor of the at least one communication element may be configured to, for each of the plurality of antennas of the at least one communication element, control the phase and/or amplitude of the at least one signal transmitted and/or received by the antenna using the at least one antenna amplitude weight and/or the antenna phase weight in accordance with the at least one beamforming method.

According to one or more embodiments of the present invention, the at least one control signal may be configured so as to control the at least one PEM, for example so as to control operation of the at least one PEM (e.g., so as to control switching operation of any power electronics components such as IGBTs which may be included in the at least one PEM).

According to one or more embodiments of the present invention, the at least one PEM may be communicatively coupled with at least one power electronics component (PEC) and may be configured to control operation of the at least one PEC by means of transmitting at least one control signal to the at least one PEC. The at least one control signal transmitted to the at least one PEC may be based on or identical to the at least one control signal which the at least one PEM receives via the communications system.

The communications system may comprise at least one control unit, or controller. The control unit may be configured to generate at least one control signal for and/or process at least one message from the at least one PEM. The at least one control unit may comprise a communication module configured to transmit the at least one control signal and/or receive the at least one message. The communication module of the at least one control unit may be capable of wired and/or wireless communication.

The at least one communication element may comprise a communication module configured to receive the at least one control signal transmitted by the at least one control unit. The communication module of the at least one communication element may be capable of wired and/or wireless communication. The at least one communication element may be configured to transmit the received at least one control signal to the at least one PEM and/or receive the at least one message from the at least one PEM by means of the plurality of antennas of the at least one communication element in accordance with the at least one beamforming method.

As described in the foregoing, transmission of one or more control signals to and/or reception of one or more messages from at least one PEM may be carried out using wireless communication and employing beamforming, e.g., transmit beamforming or receive beamforming, respectively. According to one or more embodiments of the present invention, the at least one PEM may employ beamforming. To that end, the at least one PEM may comprise a plurality of antennas configured for wireless communication, wherein each of the plurality of antennas is configured to receive and/or transmit at least one signal using at least one (possibly controllable) antenna weight. The at least one PEM may comprise a processor communicatively coupled with each of the plurality of antennas of the at least one PEM and configured to, for each of the plurality of antennas of the at least one PEM, control the phase and/or the amplitude of the at least one signal received and/or transmitted by the antenna using the at least one antenna weight in accordance with at least one receive beamforming method. The at least one PEM may be configured to receive the at least one control signal and/or transmit the at least one message by means of the plurality of antennas of the at least one PEM in accordance with the at least one beamforming method. For example, the at least one antenna weight may comprise a (possibly controllable) antenna phase weight and a (possibly controllable) antenna amplitude weight. The processor of the at least one PEM may be configured to, for each of the plurality of antennas of the at least one PEM, control the phase and/or the amplitude of the at least one signal received and/or transmitted by the antenna using the antenna phase weight and the antenna amplitude weight in accordance with at least one beamforming method, algorithm or process.

The at least one beamforming method, algorithm or process may for example comprise, utilize or be based on one or more beamforming or beam steering method as known in the art, such as, for example, adaptive beamforming, phase array beamforming, fixed or switched beam beamforming, and/or one or more beamforming techniques used in cellular phone standards (e.g., Transmit antenna array (TxAA) beamforming, multiple-input-multiple-output (MIMO) precoding based beamforming, etc.).

According to a third aspect, there is provided a method in a communication element (e.g., a communication element according to the first aspect) for use in conjunction with a communications system (e.g., a communications system according to the second aspect) for transmitting at least one control signal to and/or receiving at least one message from at least one PEM. The at least one PEM may comprise a communication module capable of wireless communication and configured to receive and/or transmit at least one signal. The communication element may comprise a plurality of antennas capable of wireless communication, each of the plurality of antennas being configured to transmit and/or receive at least one signal using at least one antenna weight. The method comprises, for each of the plurality of antennas, controlling the phase and/or amplitude of the at least one signal transmitted by the antenna using the at least one antenna weight in accordance with at least one beamforming method. The method comprises transmitting the at least one control signal to and/or receiving the at least one message from the at least one PEM by means of the plurality of antennas in accordance with the at least one beamforming method.

As described in the foregoing, the at least one beamforming method may use at least one beamforming parameter, which at least one beamforming parameter may be variable, or adjustable.

The method may comprise carrying out a calibration process for adjusting the at least one beamforming parameter. The method may comprise, for each of the plurality of antennas, controlling the phase and/or the amplitude of the at least one signal transmitted and/or received by the antenna using the at least one antenna weight in accordance with at least one beamforming method, using the at least one beamforming parameter. The method may comprise transmitting a calibration signal to the at least one PEM by means of the plurality of antennas in accordance with the at least one beamforming method using the at least one beamforming parameter, and in response to the transmitted calibration signal, receiving a calibration response signal from the at least one PEM by means of the communication module, the calibration response signal including a measure of quality of a communication link between the communication element and the at least one PEM. The method may comprise adjusting the at least one beamforming parameter based on the calibration response signal.

According to a fourth aspect, there is provided a computer program product comprising computer-executable components for causing a processor of a communication element according to the first aspect perform a method according to the third aspect when the computer-executable components are executed on the processor.

According to a fifth aspect, there is provided a computer-readable digital storage medium comprising a computer program product comprising computer-executable components for causing a processor of a communication element according to the first aspect perform a method according to the third aspect when the computer-executable components are executed on the processor.

The computer-readable means, or computer readable (digital) storage mediums, shown may for example include a Digital Versatile Disc (DVD) or a floppy disk or any other suitable type of computer-readable means or computer-readable digital storage medium, such as, but not limited to, a nonvolatile memory, a hard disk drive, a Compact Disc (CD), a Flash memory, magnetic tape, a Universal Serial Bus (USB) memory device, a Zip drive, etc.

The processor may include or be constituted for example by any suitable central processing unit (CPU), integrated circuit, microcontroller, Digital Signal Processor (DSP), Application Specific Integrated Circuit (ASIC), Field-Programmable Gate Array (FPGA) circuit, etc., or any combination thereof. The processor may optionally be capable of executing software instructions stored in a computer program product e.g. in the form of a memory. The memory may for example be any combination of random access memory (RAM) and read-only memory (ROM). The memory may comprise persistent storage, which for example can be a magnetic memory, an optical memory, a solid state memory or a remotely mounted memory, or any combination thereof.

Further objects and advantages of the present invention are described in the following by means of exemplifying embodiments. It is noted that the present invention relates to all possible combinations of features recited in the claims. Further features of, and advantages with, the present invention will become apparent when studying the appended claims and the description herein. Those skilled in the art realize that different features of the present invention can be combined to create embodiments other than those described herein.

### BRIEF DESCRIPTION OF THE DRAWINGS

Exemplifying embodiments of the present invention will be described below with reference to the accompanying drawings.
Figure 1 is a schematic view of a communications system according to an embodiment of the present invention.
Figure 2 is a schematic flowchart of a method according to an embodiment of the present invention.

All the figures are schematic, not necessarily to scale, and generally only show parts which are necessary in order to elucidate embodiments of the present invention, wherein other parts may be omitted or merely suggested.

### DETAILED DESCRIPTION

The present invention will now be described hereinafter with reference to the accompanying drawings, in which exemplifying embodiments of the present invention are shown. The present invention may, however, be embodied in many different forms and should not be construed as limited to the embodiments of the present invention set forth herein; rather, these embodiments are provided by way of example so that this disclosure will convey the scope of the present invention to those skilled in the art.

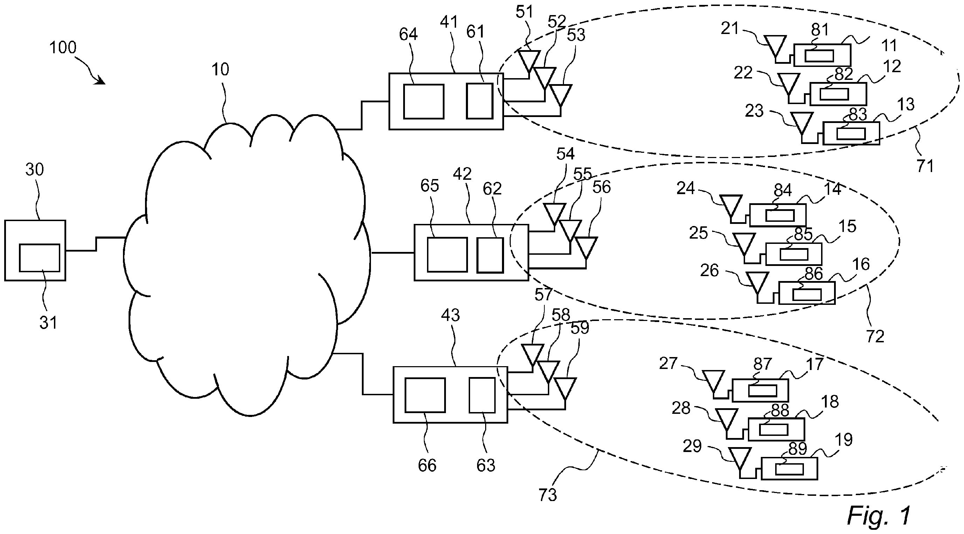

Figure 1 is a schematic view of a communications system 100 according to an embodiment of the present invention. The communications system 100 comprises a plurality of power electronics modules (PEMs) 11-19. Each of the PEMs 11 to 19 comprises a communication module 21 to 29, respectively, capable of wireless communication. In accordance with the embodiment of the present invention illustrated in Figure 1, the communication modules 21-29 of the PEMs 11-19 are illustrated as antennas 21-29, which for example may comprise or be constituted by radio frequency (RF) antennas. The RF antennas may for example be configured to operate within a frequency range between (about) 3 kHz and (about) 300 kHz, but are not limited thereto, and one or more of the RF antennas could be configured to operate at lower or higher frequencies (possibly outside the RF frequency range). Each of the communication modules 21-29 is configured to receive and/or transmit at least one signal. Each of the PEMs 11-19 may configured to receive at least one control signal and/or to transmit at least one message via the communications system 100. The at least one message may for example include, but is not limited to, one or more of a status message, an alarm message, or acknowledgement/negative acknowledgement (ACK/NACK) messages. As will be further described in the following, the communications system 100 is for transmitting at least one control signal to and/or receiving (the) at least one message from the respective ones of each of the PEMs 11-19. It is to be understood that the number of PEMs 11-19 in the communications system 100 illustrated in Figure 1 is according to an example, and that the number of PEMs in the communications system 100 could be more or less than illustrated in Figure 1. For example, there could be up to a thousand or even several thousands of PEMs in the communications system 100.

The communications system 100 comprises a control unit, or controller, 30. Even though the communications system 100 illustrated in Figure 1 only includes one control unit 30, it is to be understood that the communications system 100 could - in accordance with one or more other embodiments of the present invention - comprise more than one control unit, or controller. The control unit 30 may for example be configured to generate at least one control signal for and/or process at least one message from the respective ones of each of the PEMs 11-19. The control unit 30 comprises a communication module 31 which is configured to transmit the at least one control signal for each of the PEMs 11-19 and/or to receive at least one message from the respective ones of each of the PEMs 11-19. The communication module 31 may be capable of wired and/or wireless communication.

The communications system 100 comprises a plurality of communication elements 41 to 43. The communication elements 41 to 43 may be communicatively coupled with the controller 30 via a communications network, schematically indicated by reference numeral 10.

At least a part or portion of the communications network 10 or the entire communications network 10 may be a so called zero-hop communication network, meaning that the communication elements 41 to 43 may be directly communicatively coupled with the controller 30, i.e. without any intermediate transmit/receive units for relaying communication between controller 30 and the respective ones of the communication elements 41 to 43. At least a part or portion of the communications network 10 or the entire communications network 10 may be a so called single-hop communication network, meaning that the communication elements 41 to 43 may be communicatively coupled with the controller 30 via an intermediate transmit/receive unit for relaying communication between controller 30 and the respective ones of the communication elements 41 to 43. At least a part or portion of the communications network 10 or the entire communications network 10 may be a so called multi-hop communication network, meaning that the communication elements 41 to 43 may be communicatively coupled with the controller 30 via a plurality of intermediate transmit/receive units for relaying communication between controller 30 and the respective ones of the communication elements 41 to 43. Thus, in the context of the present application, by a single-hop or multi-hop communications network it is meant that there are one or more intermediate transmit/receive units comprised in the communications network or communication of at least one signal over at least a part or portion of the communications network. The communications network may comprise a plurality of communication links, which may be communicatively connected by means of one or more intermediate transmit/receive units. The one or more intermediate transmit/receive units may function as relays or repeaters in the communications network.

The communications network 10 may be based on wireless communication, or wired communication, or hybrid communication. In the context of the present application, by hybrid communication it is meant communication which in part comprises wireless communication (e.g., using a communication link over an air interface), and in part comprises wired communication (e.g., using at least one optical waveguide), for communication of at least one signal over at least a part or portion of the communications network.

As illustrated in Figure 1, the control unit 30 may be communicatively coupled with the communications network 10 using wired communication, but it is to be understood that the control unit 30 in alternative could be communicatively coupled with the communications network 10 using wireless communication or hybrid communication.

As is also illustrated in Figure 1, each of the communication elements 41 to 43 may be communicatively coupled with the communications network 10 using wired communication, but it is to be understood that each or any of the communication elements 41 to 43 in alternative could be communicatively coupled with the communications network 10 using wireless communication or hybrid communication.

As mentioned in the foregoing, the control unit 30 may for example be configured to generate at least one control signal for each of the PEMs 11-19 and/or process at least one message from the respective ones of the PEMs 11-19, and the control unit 30 comprises a communication module 31 which is configured to transmit the at least one control signal for each of the PEMs 11-19 and/or to receive (the) at least one message from the respective ones of the PEMs 11-19. In accordance with the embodiment of the present invention illustrated in Figure 1, the generated control signals for the PEMs 11-19 are transmitted to the PEMs 11-19 via the communications network 10 and the communication elements 41 to 43.

Further in accordance with the embodiment of the present invention illustrated in Figure 1, the communication element 41 may be configured to receive any control signal generated by the control unit 30 for the PEMs 11 to 13 and transmitted from the control unit 30 via the communications network 10. Further in accordance with the embodiment of the present invention illustrated in Figure 1, the communication element 42 may be configured to receive any control signal generated by the control unit 30 for the PEMs 14 to 16 and transmitted from the control unit 30 via the communications network 10. And further in accordance with the embodiment of the present invention illustrated in Figure 1, the communication element 43 may be configured to receive any control signal generated by the control unit 30 for the PEMs 17 to 19 and transmitted from the control unit 30 via the communications network 10. To this end, the communication elements 41 to 43 may each comprise a communication module 64 to 66, respectively, which may be configured to receive any control signal transmitted by the control unit 30. Each or any of the communication modules 64 to 66 may be capable of wired and/or wireless communication.

Each of the communication elements 41-43 comprises a plurality of antennas 51-53, 54-56 and 57-59, respectively. The plurality of antennas 51-53, 54-56 and 57-59, respectively, are configured for wireless communication. In accordance with the embodiment of the present invention illustrated in Figure 1, the plurality of antennas 51-53, 54-56 and 57-59, respectively, may comprise or be constituted by radio frequency (RF) antennas. The RF antennas may for example be configured to operate within a frequency range between (about) 3 kHz and (about) 300 kHz, but are not limited thereto, and one or more of the RF antennas could be configured to operate at lower or higher frequencies (possibly outside the RF frequency range). It is to be understood that the number of antennas in each of the communication elements 41-43 is according to an example and that any one of the communication elements 41-43 could include less or more antennas than illustrated in Figure 1. Also, the number of antennas in the respective communication elements 41-43 must not necessarily be equal, such as illustrated in Figure 1, but there may possibly be different numbers of antennas in different communication elements 41-43. Each or any one of the antennas 51-59 may capable of both transmitting and receiving.

For each of the communication elements 41-43, each antenna of the plurality of antennas 51-53, 54-56 and 57-59, respectively, of the respective ones of the communication elements 41-43 may be configured to transmit and/or receive at least one signal using a (possibly controllable) antenna phase weight and a (possibly controllable) antenna amplitude weight. Each of the communication elements 41 to 43 comprises a processor 61 to 63, respectively. The processor 61 is communicatively coupled with each of the plurality of antennas 51-53, the processor 62 is communicatively coupled with each of the plurality of antennas 54-56, and the processor 63 is communicatively coupled with each of the plurality of antennas 57-59. The processor 61 may be configured to, for each of the plurality of antennas 51-53, control the phase and the amplitude of the at least one signal transmitted and/or received by the antenna 51-53 using the corresponding antenna phase weight and the corresponding antenna amplitude weight in accordance with at least one beamforming method or algorithm. Similarly, the processor 62 may be configured to, for each of the plurality of antennas 54-56, control the phase and the amplitude of the at least one signal transmitted and/or received by the antenna 54-56 using the corresponding antenna phase weight and the corresponding antenna amplitude weight in accordance with at least one beamforming method or algorithm. Similarly, the processor 63 may be configured to, for each of the plurality of antennas 57-59, control the phase and the amplitude of the at least one signal transmitted and/or received by the antenna 57-59 using the corresponding antenna phase weight and the corresponding antenna amplitude weight in accordance with at least one beamforming method or algorithm. The processors 61 to 63 may be configured to employ the same beamforming method or algorithm, or at least some or all may employ different beamforming methods or algorithms. As indicated in the foregoing, it is not necessary to use weights for both phase and amplitude, and it is to be understood that this is according to an exemplifying embodiment of the present invention. For example, only weights for one of phase and amplitude may be used.

The communication element 41 is configured to transmit any control signal, which may have been generated by the control unit 30 for the PEMs 11 to 13 and transmitted to the communication element 41 from the control unit 30 via the communications network 10, to the PEMs 11 to 13 and/or to receive at least one message from the respective ones of the PEMs 11 to 13 by means of the plurality of antennas 51-53 in accordance with the at least one beamforming method that the processor 61 is configured to execute. Similarly, the communication element 42 is configured to transmit any control signal, which may have been generated by the control unit 30 for the PEMs 14 to 16 and transmitted to the communication element 42 from the control unit 30 via the communications network 10, to the PEMs 14 to 16 and/or to receive at least one message from the respective ones of the PEMs 14 to 16 by means of the plurality of antennas 54-56 in accordance with the at least one beamforming method that the processor 62 is configured to execute. And similarly, the communication element 43 is configured to transmit any control signal, which may have been generated by the control unit 30 for the PEMs 17 to 19 and transmitted to the communication element 43 from the control unit 30 via the communications network 10, to the PEMs 17 to 19 and/or to receive at least one message from the respective ones of the PEMs 17 to 19 by means of the plurality of antennas 57-59 in accordance with the at least one beamforming method that the processor 63 is configured to execute.

Thus, transmission of one or more control signals to the PEMs 11 to 19 and/or reception of at least message from the PEMs 11 to 19 may be carried out using wireless communication and employing so-called (dynamic) beamforming. The processors 61 to 63 of the communication elements 41 to 43, respectively, may include one or more signal processing circuits configured to execute the at least one beamforming method that the processor 61, 62 and 63, respectively, is configured to execute.

Each or any plurality of the pluralities of antennas 51-53, 54-56 and 67-59, respectively, may for example include or be constituted by a so called phased antenna array.

By the respective ones of the communication elements 41 to 43 being configured to transmit any control signal to and/or receive at least one message from the PEMs 11 to 13, the PEMs 14 to 16, and the PEMs 17 to 19, respectively, by means of the plurality of antennas 51-53, 54-56, and 57-59, respectively, employing beamforming, the radiation patterns of the plurality of antennas 51-53, 54-56, and 57-59, respectively, may be adjusted for example so as adjust the orientation and/or width of, e.g., the main lobes of the radiation patterns, which may be referred to the antenna beams of the communication elements 41 to 43, respectively. The antenna beams of the communication elements 41 to 43, respectively, are very schematically indicated in Figure 1 by reference numerals 71 to 73, respectively.

As illustrated in Figure 1 by the antenna beams 71 to 73, by adjusting the orientation of the main lobes of the radiation patterns of the plurality of antennas 51-53, 54-56, and 57-59, respectively, the orientation of the radiation patterns of the plurality of antennas 51-53, 54-56, and 57-59, respectively, with respect to the PEMs 11 to 13, 14 to 16, and 17-19, respectively, may be optimized, which may enable or facilitate achieving a relatively high reliability in communication between the communication elements 41 to 43 and the PEMs 11 to 13, 14 to 16, and 17-19, respectively.

And as further illustrated in Figure 1 by the antenna beams 71 to 73, by adjusting the width of the main lobes of the radiation patterns of the plurality of antennas 51-53, 54-56, and 57-59, respectively, the width of the radiation patterns of the plurality of antennas 51-53, 54-56, and 57-59, respectively, with respect to the PEMs 11 to 13, 14 to 16, and 17-19, respectively, may be optimized for example with respect to directionality, which may enable or facilitate achieving relatively low interference of the radiation patterns of the plurality of antennas 51-53, 54-56, and 57-59, respectively, with respect to each other at the PEMs 11 to 13, 14 to 16, and 17-19, respectively, even if the PEMs 11 to 13, 14 to 16, and 17-19, respectively, would be arranged relatively close to each other. This may facilitate or enable for the plurality of antennas 51-53, 54-56, and 57-59, respectively (or communication elements 41 to 43, respectively) to use the same frequency band, which in turn may facilitate or allow for having a relatively large number of communication elements such as communication elements 41 to 43 illustrated in Figure 1 in the communications system 100. This may be advantageous for example in case of relatively large power electronics systems, wherein it may be desired for a control unit such as the control unit 30 illustrated in Figure 1 to transmit control signals to and/or receive messages from a relatively large number of PEMs, for example a thousand or several thousands of PEMs.

The one or more control signals which are transmitted to the respective ones of the PEMs 11 to 19 may be configured so as to control the respective ones of the PEMs 11 to 19, for example so as to control operation of the respective ones of the PEMs 11 to 19 (e.g., so as to control switching operation of any power electronics components (PECs) such as IGBTs which may be included in the respective PEM 11 to 19).

In alternative or in addition, each or any one of the PEMs 11 to 19 may be communicatively coupled with at least one PEC (not shown in Figure 1) and may be configured to control operation of the at least one PEC by means of transmitting at least one control signal to the at least one PEC. The at least one control signal transmitted to the at least one PEC may be based on or identical to the one or more control signals which the PEM receives via the communications system 100.

Although the communication modules 64 to 66 of the communication elements 41 to 43, respectively, are illustrated in Figure 1 as being constituted by separate devices or components of the respective communication elements 41 to 43, it is to be understood that this is not required. For example, the communication modules 64 to 66 could in alternative be including or be constituted by the plurality antennas 51-53, 54-56, and 57-59, and the processors 61 to 63, respectively, of the communication elements 61 to 63, respectively. For each of the communication elements 61 to 63, the respective plurality of antennas 51-53, 54-56, and 57-59, respectively, may be configured to receive any control signal transmitted by the control unit 30, as described in the foregoing.

Each or any one of the PEMs 11-19 may possibly be capable of beamforming, e.g., similarly to the communication elements 41 to 43. To that end, each or any one of the PEMs 11-19 may comprise a plurality of antennas (only one antenna 21-29 of each the PEMs 11-19 is shown in Figure 1) configured for wireless communication, wherein each of the plurality of antennas of the PEM 11-19 may be configured to receive and/or transmit at least one signal using at least one (possibly controllable) antenna weight. As illustrated in Figure 1, each or any one of the PEMs 11 to 19 may comprise a processor 81 to 89, respectively. The processor 81-89 of the respective PEM 11-19 may be communicatively coupled with each of the plurality of antennas of the respective PEM 11-19 and configured to, for each of the plurality of antennas, control the phase and/or the amplitude of the at least one signal received and/or transmitted by the antenna using the at least one antenna weight in accordance with at least one beamforming method. The respective PEM 11-19 may be configured to receive the one or more control signals which are transmitted to the PEM 11-19 and/or to transmit at least one message by means of the plurality of antennas of the respective PEM 11-19 in accordance with the at least one receive beamforming method. As mentioned in the foregoing, the at least one message may for example include, but is not limited to, one or more of a status message, an alarm message, or acknowledgement/negative acknowledgement (ACK/NACK) messages.

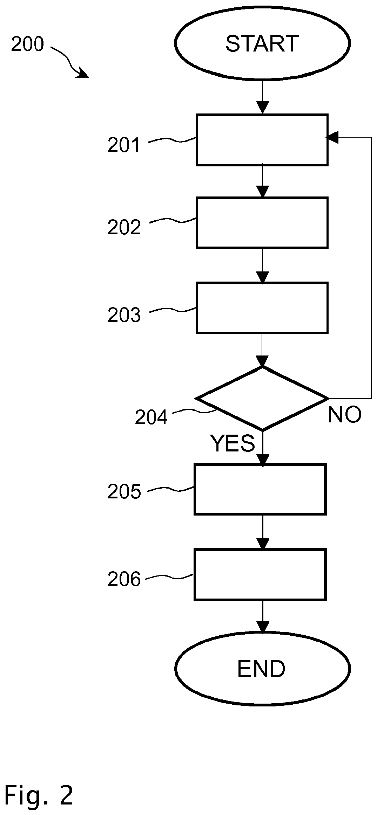

Figure 2 is a schematic flowchart of a method 200 in accordance with an embodiment of the present invention. The method 200 is carried out in a communication element such as, for example, each or any one of the communication elements 41 to 43 depicted in Figure 1, for use in conjunction with a communications system for transmitting at least one control signal to and/or receiving at least one message from at least one PEM, the at least one PEM comprising a communication module capable of wireless communication and configured to receive and/or transmit at least one signal. The communication element comprises a plurality of antennas capable of wireless communication, wherein each of the plurality of antennas is configured to transmit at least one signal using at least one antenna weight.

The method 200 comprises, for each of the plurality of antennas, controlling the phase and/or amplitude of the at least one signal transmitted and/or received by the antenna using the at least one antenna weight in accordance with at least one beamforming method, 205, and transmitting the at least one control signal to and/or receiving the at least one message from the at least one PEM by means of the plurality of antennas in accordance with the at least one beamforming method, 206. The method 200 may then end.

The at least one beamforming method may use at least one beamforming parameter, which at least one beamforming parameter may be variable, or adjustable. In accordance with the embodiment of the present invention illustrated in Figure 1, the method 200 comprises - prior to the steps 205 and 206 described in the foregoing - carrying out a calibration process for adjusting the at least one beamforming parameter.

To that end, the method 200 comprises, for each of the plurality of antennas, controlling the phase and/or the amplitude of the at least one signal transmitted and/or received by the antenna using the at least one antenna weight in accordance with at least one beamforming method, using the at least one beamforming parameter, and transmitting a calibration signal to the at least one PEM by means of the plurality of antennas in accordance with the at least one beamforming method using the at least one beamforming parameter, 201. In response to the transmitted calibration signal, a calibration response signal from the at least one PEM is received by means of the communication module, 202. The calibration response signal includes a measure of quality of a communication link between the communication element and the at least one PEM. The at least one beamforming parameter is adjusted based on the calibration response signal, 203. The steps 201 to 203 may be carried out repeatedly until a difference between the measure of quality included in the calibration response signal and the measure of quality of the communication link included in the previously received calibration response signal is below a threshold value, and/or until a selected number of rounds of the steps 201 to 203 has been carried out. Accordingly, at 204 it is determined whether a difference between the measure of quality included in the calibration response signal and the measure of quality of the communication link included in the previously received calibration response signal is below a threshold value and/or a selected number of rounds of the steps 201 to 203 has been carried out. If any of these two conditions are true, the method may proceed to step 205. Otherwise, the method may return to step 201. The steps 201 to 204 which are preceding the steps 205 and 206 are optional.

In conclusion, a communication element is disclosed for use in conjunction with a communications system for transmitting at least one control signal to and/or receiving at least one message from at least one power electronics module. The communication element comprises a plurality of antennas capable of wireless communication. The communication element is configured to transmit the at least one control signal to and/or receive the at least one message from the at least one power electronics module by means of the plurality of antennas in accordance with at least one beamforming method.

While the present invention has been illustrated in the appended drawings and the foregoing description, such illustration is to be considered illustrative or exemplifying and not restrictive; the present invention is not limited to the disclosed embodiments. Other variations to the disclosed embodiments can be understood and effected by those skilled in the art in practicing the claimed invention, from a study of the drawings, the disclosure, and the appended claims. In the appended claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A communication element (41-43) for use in conjunction with a communications system (100) for transmitting at least one control signal to and/or receiving at least one message from at least one power electronics module (11-19), the at least one power electronics module comprising a communication module (21-29) capable of wireless communication and configured to receive and/or transmit at least one signal, the communication element comprising:
a plurality of antennas (51-53, 54-56, 57-59) capable of wireless communication, each of the plurality of antennas being configured to transmit and/or receive at least one signal using at least one antenna weight;
a processor (61, 62, 63), the processor being communicatively coupled with each of the plurality of antennas and configured to, for each of the plurality of antennas, control the phase and/or amplitude of the at least one signal transmitted and/or received by the antenna using the at least one antenna weight in accordance with at least one beamforming method;
wherein the communication element is configured to transmit the at least one control signal to and/or receive the at least one message from the at least one power electronics module by means of the plurality of antennas in accordance with the at least one beamforming method;
wherein the communication element comprises a communication module (64-66) configured to receive at least one signal, and wherein the at least one beamforming method uses at least one beamforming parameter, the at least one beamforming parameter being variable, wherein the processor is configured to, for each of the plurality of antennas, control the phase and/or the amplitude of the at least one signal transmitted and/or received by the antenna using the at least one antenna weight in accordance with at least one beamforming method, using the at least one beamforming parameter, wherein the communication element is configured to transmit the at least one control signal to and/or receive the at least one message from the at least one power electronics module by means of the plurality of antennas in accordance with the at least one beamforming method, using the at least one beamforming parameter, wherein the communication element is configured to carry out a calibration process for adjusting the at least one beamforming parameter, wherein the communication element is configured to:
transmit a calibration signal to the at least one power electronics module by means of the plurality of antennas in accordance with the at least one beamforming method using the at least one beamforming parameter;
in response to the transmitted calibration signal, receive a calibration response signal from the at least one power electronics module by means of the communication module, the calibration response signal including a measure of quality of a communication link between the communication element and the at least one power electronics module;
adjust the at least one beamforming parameter based on the calibration response signal;
wherein the communication element is configured to carry out the calibration process for adjusting the at least one beamforming parameter responsive to a determination that a measure of a communication reliability of the communication link between the communication element and the at least one power electronics module is below a threshold value.

2. A communication element according to claim 1, wherein the communications system comprises at least one control unit (30) configured to generate at least one control signal for and/or process at least one message from the at least one power electronics module, the at least one control unit comprising a communication module (31) configured to transmit the at least one control signal and/or receive the at least one message;
wherein the communication element comprises a communication module (64-66) configured to receive the at least one control signal transmitted by the at least one control unit, wherein the communication element is configured to transmit the received at least one control signal to the at least one power electronics module and/or receive the at least one message from the at least one power electronics module by means of the plurality of antennas of the communication element in accordance with the at least one beamforming method.

3. A communication element according to claim 2, wherein the communication module of the communication element includes or is constituted by the plurality antennas and the processor, wherein the plurality of antennas are configured to receive the at least one control signal transmitted by the at least one control unit.

4. A communication element according to any one of claims 1-3, wherein the communication element is configured to repeatedly transmit a calibration signal to the at least one power electronics module by means of the plurality of antennas in accordance with the at least one beamforming method using the adjusted at least one beamforming parameter, and in response to the transmitted calibration signal, receive a calibration response signal from the at least one power electronics module by means of the communication module, the calibration response signal including a measure of quality of the communication link between the communication element and the at least one power electronics module, and adjust the at least one beamforming parameter based on the calibration response signal, until a difference between the measure of quality included in the calibration response signal and the measure of quality of the communication link included in the previously received calibration response signal is below a threshold value.

5. A communication element according to any one of claims 1-4, wherein the calibration response signal includes one or more of a measure of the receive signal strength at the at least one power electronics module, or an error rate of the communication link between the communication element and the at least one power electronics module.

6. A communication element according to any one of claims 1-5, wherein the at least one beamforming parameter comprises one or more of the at least one antenna weight of the plurality of antennas, a frequency of the communication link between the communication element and the at least one power electronics module, or a bandwidth of the communication link between the communication element and the at least one power electronics module.

7. A communication element according to any one of claims 1-6, wherein the communication element is configured to carry out the calibration process for adjusting the at least one beamforming parameter prior to transmitting the at least one control signal to and/or receiving the at least one message from the at least one power electronics module by means of the plurality of antennas in accordance with the at least one beamforming method.

8. A communication element according to any one of claims 1-7, wherein the communication element is configured to continuously or continually determine the measure of a communication reliability of the communication link between the communication element and the at least one power electronics module and compare the measure with the threshold value.

9. A communication element according to any one of claims 1-8, wherein the measure of a communication reliability of the communication link between the communication element and the at least one power electronics module includes one or more of latency of the communication link or an error rate of the communication link.

10. A communication element according to any one of claims 1-9, wherein the communications system is for transmitting at least one control signal to and/or receiving at least one message from a plurality of power electronics modules (11-19), wherein the at least one power electronics module is one of the plurality of power electronics modules, and wherein the adjusted at least one beamforming parameter obtained by the calibration process for the communication element to transmit the at least one control signal to and/or receive the at least one message from the at least one power electronics module by means of the plurality of antennas in accordance with the at least one beamforming method, using the at least one beamforming parameter, is used also for the communication element to transmit the at least one control signal to and/or receive the at least one message from one or more other ones of the plurality of power electronics modules by means of the plurality of antennas in accordance with the at least one beamforming method.

11. A communication element according to claim 10, wherein the adjusted at least one beamforming parameter obtained by the calibration process is used also for the communication element to transmit the at least one control signal to and/or receive the at least one message from one or more other ones of the plurality of power electronics modules by means of the plurality of antennas in accordance with the at least one beamforming method only on a condition that the one or more other ones of the plurality of power electronics modules are within a selected distance from the at least one power electronics module.

12. A communications system (100) comprising:
at least one power electronics module (11-19), the at least one power electronics module comprising a communication module capable of wireless communication, the communication module being configured to receive and/or transmit at least one signal, wherein the at least one power electronics module is configured to receive at least one control signal and/or transmit at least one message via the communications system; and
at least one communication element (41-43) comprising:
a plurality of antennas (51-53, 54-56, 57-59) configured for wireless communication, each of the plurality of antennas being configured to transmit and/or receive at least one signal using at least one antenna weight; and
a processor (61-63), the processor being communicatively coupled with each of the plurality of antennas and configured to, for each of the plurality of antennas, control the phase and/or the amplitude of the at least one signal transmitted and/or received by the antenna using the at least one antenna weight in accordance with at least one beamforming method;
wherein the at least one communication element is configured to transmit the at least one control signal to and/or receive the at least one message from the at least one power electronics module by means of the plurality of antennas in accordance with the at least one beamforming method;
wherein the at least one communication element comprises a communication module (64-66) configured to receive at least one signal, and wherein the at least one beamforming method uses at least one beamforming parameter, the at least one beamforming parameter being variable, wherein the processor is configured to, for each of the plurality of antennas, control the phase and/or the amplitude of the at least one signal transmitted and/or received by the antenna using the at least one antenna weight in accordance with at least one beamforming method, using the at least one beamforming parameter, wherein the at least one communication element is configured to transmit the at least one control signal to and/or receive the at least one message from the at least one power electronics module by means of the plurality of antennas in accordance with the at least one beamforming method, using the at least one beamforming parameter, wherein the at least one communication element is configured to carry out a calibration process for adjusting the at least one beamforming parameter, wherein the at least one communication element is configured to:
transmit a calibration signal to the at least one power electronics module by means of the plurality of antennas in accordance with the at least one beamforming method using the at least one beamforming parameter;
in response to the transmitted calibration signal, receive a calibration response signal from the at least one power electronics module by means of the communication module, the calibration response signal including a measure of quality of a communication link between the at least one communication element and the at least one power electronics module;
adjust the at least one beamforming parameter based on the calibration response signal;
wherein the at least one communication element is configured to carry out the calibration process for adjusting the at least one beamforming parameter responsive to a determination that a measure of a communication reliability of the communication link between the at least one communication element and the at least one power electronics module is below a threshold value.

13. A communications system according to claim 12, further comprising:
at least one control unit (30) configured to generate at least one control signal for and/or process at least one message from the at least one power electronics module, the at least one control unit comprising a communication module (31) configured to transmit the at least one control signal and/or receive the at least one message;
wherein the at least one communication element comprises a communication module (64-66) configured to receive the at least one control signal transmitted by the at least one control unit, wherein the at least one communication element is configured to transmit the received at least one control signal to the at least one power electronics module and/or receive the at least one message from the at least one power electronics module by means of the plurality of antennas of the at least one communication element in accordance with the at least one beamforming method.

14. A communications system according to claim 12 or 13, wherein the at least one power electronics module comprises:
a plurality of antennas (21-29) configured for wireless communication, each of the plurality of antennas being configured to receive and/or transmit at least one signal using at least one antenna weight; and
a processor (81-89), the processor being communicatively coupled with each of the plurality of antennas and configured to, for each of the plurality of antennas, control the phase and/or the amplitude of the at least one signal received and/or transmitted by the antenna using the at least one antenna weight in accordance with at least one receive beamforming method;
wherein the at least one power electronics module is configured to receive the at least one control signal and/or transmit the at least one message by means of the plurality of antennas of the at least one power electronics module in accordance with the at least one receive beamforming method.

15. A method (200) in a communication element (41-43) for use in conjunction with a communications system (100) for transmitting at least one control signal to and/or receiving at least one message from at least one power electronics module (11-19), the at least one power electronics module comprising a communication module (21-29) capable of wireless communication and configured to receive and/or transmit at least one signal, the communication element comprising a plurality of antennas (51-53, 54-56, 57-59) capable of wireless communication, each of the plurality of antennas being configured to transmit and/or receive at least one signal using at least one antenna weight, the method comprising:
for each of the plurality of antennas, controlling the phase and/or amplitude of the at least one signal transmitted and/or received by the antenna using the at least one antenna weight in accordance with at least one beamforming method (205); and
transmitting the at least one control signal to and/or receiving the at least one message from the at least one power electronics module by means of the plurality of antennas in accordance with the at least one beamforming method (206), wherein the at least one beamforming method uses at least one beamforming parameter, the at least one beamforming parameter being variable, wherein the method further comprises carrying out a calibration process for adjusting the at least one beamforming parameter, the method further comprising:
for each of the plurality of antennas, controlling the phase and/or the amplitude of the at least one signal transmitted and/or received by the antenna using the at least one antenna weight in accordance with at least one beamforming method, using the at least one beamforming parameter,
transmitting a calibration signal to the at least one power electronics module by means of the plurality of antennas in accordance with the at least one beamforming method using the at least one beamforming parameter (201);
in response to the transmitted calibration signal, receiving a calibration response signal from the at least one power electronics module by means of the communication module, the calibration response signal including a measure of quality of a communication link between the communication element and the at least one power electronics module (202); and
adjusting the at least one beamforming parameter based on the calibration response signal (203);
wherein the calibration process for adjusting the at least one beamforming parameter is carried out responsive to a determination that a measure of a communication reliability of the communication link between the communication element and the at least one power electronics module is below a threshold value.

16. A computer program product comprising computer-executable components for causing a processor (61-63) of a communication element (41-43) according to any one of claims 1-11 to perform a method according to claim 15 when the computer-executable components are executed on the processor.

17. A computer-readable digital storage medium comprising a computer program product comprising computer-executable components for causing a processor (61-63) of a communication element (41-43) according to any one of claims 1-11 to perform a method according to claim 15 when the computer-executable components are executed on the processor.

## Patentansprüche

1. Kommunikationselement (41-43) zur Verwendung im Zusammenhang mit einem Kommunikationssystem (100) zum Übertragen mindestens eines Steuersignals zu und/oder Empfangen mindestens einer Nachricht von mindestens einem Leistungselektronikmodul (11-19), wobei das mindestens eine Leistungselektronikmodul ein Kommunikationsmodul (21-29) umfasst, das zu Drahtloskommunikation fähig ist und dazu ausgelegt ist, mindestens ein Signal zu empfangen und/oder zu übertragen, wobei das Kommunikationselement Folgendes umfasst:
mehrere Antennen (51-53, 54-56, 57-59), die zu Drahtloskommunikation fähig sind, wobei jede der mehreren Antennen ausgelegt ist zum Übertragen und/oder Empfangen mindestens eines Signals unter Verwendung mindestens eines Antennengewichts;
einen Prozessor (61, 62, 63), wobei der Prozessor mit jeder der mehreren Antennen kommunikativ gekoppelt ist und ausgelegt ist, für jede der mehreren Antennen, zum Steuern der Phase und/oder Amplitude des durch die Antenne übertragenen und/oder empfangenen mindestens einen Signals unter Verwendung des mindestens einen Antennengewichts gemäß mindestens einem Strahlformungsverfahren;
wobei das Kommunikationselement dafür ausgelegt ist, mittels der mehreren Antennen gemäß dem mindestens einen Strahlformungsverfahren, das mindestens eine Steuersignal an das mindestens eine Leistungselektronikmodul zu übertragen und/oder die mindestens eine Nachricht von diesem zu empfangen;
wobei das Kommunikationselement ein Kommunikationsmodul (64-66) umfasst, das ausgelegt ist zum Empfangen mindestens eines Signals, und wobei das mindestens eine Strahlformungsverfahren mindestens einen Strahlformungsparameter verwendet, wobei der mindestens eine Strahlformungsparameter variabel ist, wobei der Prozessor ausgelegt ist, für jede der mehreren Antennen, zum Steuern der Phase und/oder der Amplitude des durch die Antenne übertragenen und/oder empfangenen mindestens einen Signals unter Verwendung des mindestens einen Antennengewichts gemäß mindestens einem Strahlformungsverfahren unter Verwendung des mindestens einen Strahlformungsparameters, wobei das Kommunikationselement dafür ausgelegt ist, mittels der mehreren Antennen gemäß dem mindestens einen Strahlformungsverfahren unter Verwendung des mindestens einen Strahlformungsparameters, das mindestens eine Steuersignal an das mindestens eine Leistungselektronikmodul zu übertragen und/oder die mindestens eine Nachricht von diesem zu empfangen,
wobei das Kommunikationselement dafür ausgelegt ist, einen Kalibrationsprozess zum Anpassen des mindestens einen Strahlformungsparameters auszuführen, wobei das Kommunikationselement ausgelegt ist zum:
Übertragen eines Kalibrationssignals an das mindestens eine Leistungselektronikmodul mittels der mehreren Antennen gemäß dem mindestens einen Strahlformungsverfahren unter Verwendung des mindestens einen Strahlformungsparameters;
als Reaktion auf das übertragene Kalibrationssignal, Empfangen eines Kalibrationsantwortsignals von dem mindestens einen Leistungselektronikmodul mittels des Kommunikationsmoduls, wobei das Kalibrationsantwortsignal ein Qualitätsmaß einer Kommunikationsstrecke zwischen dem Kommunikationselement und dem mindestens einen Leistungselektronikmodul beinhaltet;
Anpassen des mindestens einen Strahlformungsparameters auf der Grundlage des Kalibrationsantwortsignals;
wobei das Kommunikationselement dafür ausgelegt ist, den Kalibrationsprozess zum Anpassen des mindestens einen Strahlformungsparameters als Reaktion auf eine Bestimmung auszuführen, dass ein Maß für eine Kommunikationszuverlässigkeit der Kommunikationsstrecke zwischen dem Kommunikationselement und dem mindestens einen Leistungselektronikmodul unter einem Schwellenwert liegt.

2. Kommunikationselement nach Anspruch 1, wobei das Kommunikationssystem mindestens eine Steuereinheit (30) umfasst, die ausgelegt ist zum Erzeugen mindestens eines Steuersignals für das mindestens eine Leistungselektronikmodul und/oder Verarbeiten mindestens einer Nachricht von diesem, wobei die mindestens eine Steuereinheit ein Kommunikationsmodul (31) umfasst, das ausgelegt ist zum Übertragen des mindestens einen Steuersignals und/oder Empfangen der mindestens einen Nachricht;
wobei das Kommunikationselement ein Kommunikationsmodul (64-66) umfasst, das ausgelegt ist zum Empfangen des durch die mindestens eine Steuereinheit übertragenen mindestens einen Steuersignals, wobei das Kommunikationselement ausgelegt ist zum Übertragen des mindestens einen empfangenen Steuersignals an das mindestens eine Leistungselektronikmodul und/oder Empfangen der mindestens einen Nachricht von dem mindestens einen Leistungselektronikmodul mittels der mehreren Antennen des Kommunikationselements gemäß dem mindestens einen Strahlformungsverfahren.

3. Kommunikationselement nach Anspruch 2, wobei das Kommunikationsmodul des Kommunikationselements die mehreren Antennen und den Prozessor beinhaltet oder aus diesen aufgebaut ist, wobei die mehreren Antennen ausgelegt sind zum Empfangen des durch die mindestens eine Steuereinheit übertragenen mindestens einen Steuersignals.

4. Kommunikationselement nach einem der Ansprüche 1-3, wobei das Kommunikationselement ausgelegt ist zum wiederholten Übertragen eines Kalibrationssignals an das mindestens eine Leistungselektronikmodul mittels der mehreren Antennen gemäß dem mindestens einen Strahlformungsverfahren unter Verwendung des mindestens einen Strahlformungsparameters, und, als Reaktion auf das übertragene Kalibrationssignal, Empfangen eines Kalibrationsantwortsignals von dem mindestens einen Leistungselektronikmodul mittels des Kommunikationsmoduls, wobei das Kalibrationsantwortsignal ein Qualitätsmaß einer Kommunikationsstrecke zwischen dem Kommunikationselement und dem mindestens einen Leistungselektronikmodul beinhaltet, und Anpassen des mindestens einen Strahlformungsparameters auf der Grundlage des Kalibrationsantwortsignals, bis eine Differenz zwischen dem im Kalibrationsantwortsignal enthaltenen Qualitätsmaß und dem in dem zuvor empfangenen Kalibrationsantwortsignal enthaltenen Qualitätsmaß der Kommunikationsstrecke unter einem Schwellenwert liegt.

5. Kommunikationselement nach einem der Ansprüche 1-4, wobei das Kalibrationsantwortsignal ein Maß der Empfangssignalstärke an dem mindestens einen Leistungselektronikmodul und/oder eine Fehlerrate der Kommunikationsstrecke zwischen dem Kommunikationselement und dem mindestens einen Leistungselektronikmodul beinhaltet.

6. Kommunikationselement nach einem der Ansprüche 1-5, wobei der mindestens eine Strahlformungsparameter das mindestens eine Antennengewicht der mehreren Antennen und/oder eine Frequenz der Kommunikationsstrecke zwischen dem Kommunikationselement und dem mindestens einen Leistungselektronikmodul und/oder eine Bandbreite der Kommunikationsstrecke zwischen dem Kommunikationselement und dem mindestens einen Leistungselektronikmodul umfasst.

7. Kommunikationselement nach einem der Ansprüche 1-6, wobei das Kommunikationselement ausgelegt ist zum Ausführen des Kalibrationsprozesses zum Anpassen des mindestens einen Strahlformungsparameters vor dem Übertragen des mindestens einen Steuersignals an das mindestens eine Leistungselektronikmodul und/oder Empfangen der mindestens einen Nachricht von diesem mittels der mehreren Antennen gemäß dem mindestens einen Strahlformungsverfahren.

8. Kommunikationselement nach einem der Ansprüche 1-7, wobei das Kommunikationselement ausgelegt ist zum kontinuierlichen oder dauernden Bestimmen des Maßes einer Kommunikationszuverlässigkeit der Kommunikationsstrecke zwischen dem Kommunikationselement und dem mindestens einen Leistungselektronikmodul und zum Vergleichen des Maßes mit dem Schwellenwert.

9. Kommunikationselement nach einem der Ansprüche 1-8, wobei das Maß einer Kommunikationszuverlässigkeit der Kommunikationsstrecke zwischen dem Kommunikationselement und dem mindestens einen Leistungselektronikmodul Latenz der Kommunikationsstrecke und/oder eine Fehlerrate der Kommunikationsstrecke beinhaltet.

10. Kommunikationselement nach einem der Ansprüche 1-9, wobei das Kommunikationssystem zum Übertragen mindestens eines Steuersignals an mehrere Leistungselektronikmodule (11-19) und/oder Empfangen mindestens einer Nachricht von diesen dient, wobei das mindestens eine Leistungselektronikmodul eines der mehreren Leistungselektronikmodule ist, und wobei der angepasste mindestens eine Strahlformungsparameter, erhalten durch den Kalibrationsprozess für das Kommunikationselement zum Übertragen des mindestens einen Steuersignals an das mindestens eine Leistungselektronikmodul und/oder Empfangen der mindestens einen Nachricht von diesem mittels der mehreren Antennen gemäß dem mindestens einen Strahlformungsverfahren unter Verwendung des mindestens einen Strahlformungsparameters, auch für das Kommunikationselement zum Übertragen des mindestens einen Steuersignals an ein oder mehrere andere der mehreren Leistungselektronikmodule und/oder Empfangen der mindestens einen Nachricht von diesen mittels der mehreren Antennen gemäß dem mindestens einen Strahlformungsverfahren verwendet wird.

11. Kommunikationselement nach Anspruch 10, wobei der angepasste mindestens eine Strahlformungsparameter, erhalten durch den Kalibrationsprozess, auch für das Kommunikationselement zum Übertragen des mindestens einen Steuersignals an ein oder mehrere andere der mehreren Leistungselektronikmodule und/oder Empfangen der mindestens einen Nachricht von diesen mittels der mehreren Antennen gemäß dem mindestens einen Strahlformungsverfahren nur unter einer Bedingung verwendet wird, dass sich das eine oder die mehreren anderen der mehreren Leistungselektronikmodule innerhalb einer ausgewählten Distanz von dem mindestens einen Leistungselektronikmodul befinden.

12. Kommunikationssystem (100), das Folgendes umfasst:
mindestens ein Leistungselektronikmodul (11-19), wobei das Leistungselektronikmodul ein Kommunikationsmodul umfasst, das zu Drahtloskommunikation fähig ist, wobei das Kommunikationsmodul ausgelegt ist zum Empfangen und/oder Übertragen von mindestens einem Signal, wobei das mindestens eine Leistungselektronikmodul ausgelegt ist zum Empfangen mindestens eines Steuersignals und/oder Übertragen mindestens einer Nachricht über das Kommunikationssystem; und
mindestens ein Kommunikationselement (41-43), das Folgendes umfasst:
mehrere Antennen (51-53, 54-56, 57-59), die für Drahtloskommunikation ausgelegt sind, wobei jede der mehreren Antennen ausgelegt ist zum Übertragen und/oder Empfangen mindestens eines Signals unter Verwendung mindestens eines Antennengewichts; und
einen Prozessor (61-63), wobei der Prozessor mit jeder der mehreren Antennen kommunikativ gekoppelt ist und ausgelegt ist, für jede der mehreren Antennen, zum Steuern der Phase und/oder der Amplitude des durch die Antenne übertragenen und/oder empfangenen mindestens einen Signals unter Verwendung des mindestens einen Antennengewichts gemäß mindestens einem Strahlformungsverfahren;
wobei das mindestens eine Kommunikationselement dafür ausgelegt ist, mittels der mehreren Antennen gemäß dem mindestens einen Strahlformungsverfahren, das mindestens eine Steuersignal an das mindestens eine Leistungselektronikmodul zu übertragen und/oder die mindestens eine Nachricht von diesem zu empfangen;
wobei das mindestens eine Kommunikationselement ein Kommunikationsmodul (64-66) umfasst, das ausgelegt ist zum Empfangen mindestens eines Signals, und wobei das mindestens eine Strahlformungsverfahren mindestens einen Strahlformungsparameter verwendet, wobei der mindestens eine Strahlformungsparameter variabel ist, wobei der Prozessor ausgelegt ist, für jede der mehreren Antennen, zum Steuern der Phase und/oder der Amplitude des durch die Antenne übertragenen und/oder empfangenen mindestens einen Signals unter Verwendung des mindestens einen Antennengewichts gemäß mindestens einem Strahlformungsverfahren unter Verwendung des mindestens einen Strahlformungsparameters, wobei das mindestens eine Kommunikationselement dafür ausgelegt ist, mittels der mehreren Antennen gemäß dem mindestens einen Strahlformungsverfahren unter Verwendung des mindestens einen Strahlformungsparameters, das mindestens eine Steuersignal an das mindestens eine Leistungselektronikmodul zu übertragen und/oder die mindestens eine Nachricht von diesem zu empfangen, wobei das mindestens eine Kommunikationselement dafür ausgelegt ist, einen Kalibrationsprozess zum Anpassen des mindestens einen Strahlformungsparameters auszuführen, wobei das mindestens eine Kommunikationselement ausgelegt ist zum:
Übertragen eines Kalibrationssignals an das mindestens eine Leistungselektronikmodul mittels der mehreren Antennen gemäß dem mindestens einen Strahlformungsverfahren unter Verwendung des mindestens einen Strahlformungsparameters;
als Reaktion auf das übertragene Kalibrationssignal, Empfangen eines Kalibrationsantwortsignals von dem mindestens einen Leistungselektronikmodul mittels des Kommunikationsmoduls, wobei das Kalibrationsantwortsignal ein Qualitätsmaß einer Kommunikationsstrecke zwischen dem mindestens einen Kommunikationselement und dem mindestens einen Leistungselektronikmodul beinhaltet;
Anpassen des mindestens einen Strahlformungsparameters auf der Grundlage des Kalibrationsantwortsignals;
wobei das mindestens eine Kommunikationselement dafür ausgelegt ist, den Kalibrationsprozess zum Anpassen des mindestens einen Strahlformungsparameters als Reaktion auf eine Bestimmung auszuführen, dass ein Maß für eine Kommunikationszuverlässigkeit der Kommunikationsstrecke zwischen dem mindestens einen Kommunikationselement und dem mindestens einen Leistungselektronikmodul unter einem Schwellenwert liegt.

13. Kommunikationssystem nach Anspruch 12, das ferner Folgendes umfasst:
mindestens eine Steuereinheit (30), die ausgelegt ist zum Erzeugen mindestens eines Steuersignals für das mindestens eine Leistungselektronikmodul und/oder Verarbeiten mindestens einer Nachricht von diesem, wobei die mindestens eine Steuereinheit ein Kommunikationsmodul (31) umfasst, das ausgelegt ist zum Übertragen des mindestens einen Steuersignals und/oder Empfangen der mindestens einen Nachricht;
wobei das mindestens eine Kommunikationselement ein Kommunikationsmodul (64-66) umfasst, das ausgelegt ist zum Empfangen des durch die mindestens eine Steuereinheit übertragenen mindestens einen Steuersignals, wobei das mindestens eine Kommunikationselement ausgelegt ist zum Übertragen des mindestens einen empfangenen Steuersignals an das mindestens eine Leistungselektronikmodul und/oder Empfangen der mindestens einen Nachricht von dem mindestens einen Leistungselektronikmodul mittels der mehreren Antennen des mindestens einen Kommunikationselements gemäß dem mindestens einen Strahlformungsverfahren.

14. Kommunikationssystem nach Anspruch 12 oder 13, wobei das mindestens eine Leistungselektronikmodul Folgendes umfasst:
mehrere Antennen (21-29), ausgelegt für Drahtloskommunikation, wobei jede der mehreren Antennen ausgelegt ist zum Empfangen und/oder Übertragen von mindestens einem Signal unter Verwendung von mindestens einem Antennengewicht; und
einen Prozessor (81-89), wobei der Prozessor kommunikativ mit jeder der mehreren Antennen gekoppelt ist und ausgelegt ist, für jede der mehreren Antennen, zum Steuern der Phase und/oder der Amplitude des durch die Antenne empfangenen und/oder übertragenen mindestens einen Signals unter Verwendung des mindestens einen Antennengewichts gemäß mindestens einem Empfangsstrahlformungsverfahren;
wobei das mindestens eine Leistungselektronikmodul ausgelegt ist zum Empfangen des mindestens einen Steuersignals und/oder Übertragen der mindestens einen Nachricht mittels der mehreren Antennen des mindestens einen Leistungselektronikmoduls gemäß dem mindestens einen Empfangsstrahlformungsverfahren.

15. Verfahren (200) in einem Kommunikationselement (41-43) zur Verwendung im Zusammenhang mit einem Kommunikationssystem (100) zum Übertragen mindestens eines Steuersignals zu und/oder Empfangen mindestens einer Nachricht von mindestens einem Leistungselektronikmodul (11-19), wobei das mindestens eine Leistungselektronikmodul ein Kommunikationsmodul (21-29) umfasst, das zu Drahtloskommunikation fähig ist und dazu ausgelegt ist, mindestens ein Signal zu empfangen und/oder zu übertragen, wobei das Kommunikationselement mehrere Antennen (51-53, 54-56, 57-59), die zu Drahtloskommunikation fähig sind, umfasst, wobei jede der mehreren Antennen ausgelegt ist zum Übertragen und/oder Empfangen mindestens eines Signals unter Verwendung mindestens eines Antennengewichts, wobei das Verfahren Folgendes umfasst:
für jede der mehreren Antennen, Steuern der Phase und/oder Amplitude des durch die Antenne übertragenen und/oder empfangenen mindestens einen Signals unter Verwendung des mindestens einen Antennengewichts gemäß mindestens einem Strahlformungsverfahren (205); und
Übertragen des mindestens einen Steuersignals an das mindestens eine Leistungselektronikmodul und/oder Empfangen der mindestens einen Nachricht von diesem mittels der mehreren Antennen gemäß dem mindestens einen Strahlformungsverfahren (206), wobei das mindestens eine Strahlformungsverfahren mindestens einen Strahlformungsparameter verwendet, wobei der mindestens eine Strahlformungsparameter variabel ist,
wobei das Verfahren ferner Ausführen eines Kalibrationsprozesses zum Anpassen des mindestens einen Strahlformungsparameters umfasst, wobei das Verfahren ferner Folgendes umfasst:
für jede der mehreren Antennen, Steuern der Phase und/oder der Amplitude des durch die Antenne übertragenen und/oder empfangenen mindestens einen Signals unter Verwendung des mindestens einen Antennengewichts gemäß mindestens einem Strahlformungsverfahren unter Verwendung des mindestens einen Strahlformungsparameters,
Übertragen eines Kalibrationssignals an das mindestens eine Leistungselektronikmodul mittels der mehreren Antennen gemäß dem mindestens einen Strahlformungsverfahren unter Verwendung des mindestens einen Strahlformungsparameters (201);
als Reaktion auf das übertragene Kalibrationssignal, Empfangen eines Kalibrationsantwortsignals von dem mindestens einen Leistungselektronikmodul mittels des Kommunikationsmoduls, wobei das Kalibrationsantwortsignal ein Qualitätsmaß einer Kommunikationsstrecke zwischen dem Kommunikationselement und dem mindestens einen Leistungselektronikmodul beinhaltet (202); und
Anpassen des mindestens einen Strahlformungsparameters auf der Grundlage des Kalibrationsantwortsignals (203);
wobei der Kalibrationsprozess zum Anpassen des mindestens einen Strahlformungsparameters als Reaktion auf eine Bestimmung ausgeführt wird, dass ein Maß für eine Kommunikationszuverlässigkeit der Kommunikationsstrecke zwischen dem Kommunikationselement und dem mindestens einen Leistungselektronikmodul unter einem Schwellenwert liegt.

16. Computerprogrammprodukt, umfassend computerausführbare Komponenten zum Veranlassen eines Prozessors (61-63) eines Kommunikationselements (41-43) nach einem der Ansprüche 1-11, ein Verfahren nach Anspruch 15 durchzuführen, wenn die computerausführbaren Komponenten auf dem Prozessor ausgeführt werden.

17. Computerlesbares digitales Speicherungsmedium, das ein Computerprogrammprodukt umfasst, umfassend computerausführbare Komponenten zum Veranlassen eines Prozessors (61-63) eines Kommunikationselements (41-43) nach einem der Ansprüche 1-11, ein Verfahren nach Anspruch 15 durchzuführen, wenn die computerausführbaren Komponenten auf dem Prozessor ausgeführt werden.

## Revendications

1. Elément de communication (41-43) destiné à être utilisé en conjonction avec un système de communication (100) pour émettre au moins un signal de commande à au moins un module électronique de puissance (11-19) et/ou recevoir au moins un message de ce dernier, l'au moins un module électronique de puissance comprenant un module de communication (21-29) conçu pour une communication sans fil et configuré pour recevoir et/ou émettre au moins un signal, l'élément de communication comprenant :
une pluralité d'antennes (51-53, 54-56, 57-59) conçue pour une communication sans fil, chaque antenne de la pluralité d'antennes étant configurée pour émettre et/ou recevoir au moins un signal à l'aide d'au moins un poids d'antenne ;
un processeur (61, 62, 63), le processeur étant couplé en communication à chaque antenne de la pluralité d'antennes et configuré pour, pour chaque antenne de la pluralité d'antennes, commander la phase et/ou l'amplitude de l'au moins un signal émis et/ou reçu par l'antenne à l'aide de l'au moins un poids d'antenne conformément à au moins un procédé de formation de faisceau ;
dans lequel l'élément de communication est configuré pour émettre l'au moins un signal de commande à l'au moins un module électronique de puissance et/ou recevoir l'au moins un message de ce dernier au moyen de la pluralité d'antennes conformément à l'au moins un procédé de formation de faisceau ;
dans lequel l'élément de communication comprend un module de communication (64-66) configuré pour recevoir au moins un signal, et dans lequel l'au moins un procédé de formation de faisceau utilise au moins un paramètre de formation de faisceau, l'au moins un paramètre de formation de faisceau étant variable, dans lequel le processeur est configuré pour, pour chaque antenne de la pluralité d'antennes, commander la phase et/ou l'amplitude de l'au moins un signal émis et/ou reçu par l'antenne à l'aide de l'au moins un poids d'antenne conformément à au moins un procédé de formation de faisceau, utilisant l'au moins un paramètre de formation de faisceau, dans lequel l'élément de communication est configuré pour émettre l'au moins un signal de commande à l'au moins un module électronique de puissance et/ou recevoir l'au moins un message de ce dernier au moyen de la pluralité d'antennes conformément à l'au moins un procédé de formation de faisceau, utilisant l'au moins un paramètre de formation de faisceau, dans lequel l'élément de communication est configuré pour exécuter un processus d'étalonnage pour régler l'au moins un paramètre de formation de faisceau, dans lequel l'élément de communication est configuré pour :
émettre un signal d'étalonnage vers l'au moins un module électronique de puissance au moyen de la pluralité d'antennes conformément à l'au moins un procédé de formation de faisceau utilisant l'au moins un paramètre de formation de faisceau ;
en réponse au signal d'étalonnage émis, recevoir un signal de réponse d'étalonnage à partir de l'au moins un module électronique de puissance au moyen du module de communication, le signal de réponse d'étalonnage comportant une mesure de qualité d'une liaison de communication entre l'élément de communication et l'au moins un module électronique de puissance ;
régler l'au moins un paramètre de formation de faisceau en fonction du signal de réponse d'étalonnage ;
dans lequel l'élément de communication est configuré pour exécuter le processus d'étalonnage pour régler l'au moins un paramètre de formation de faisceau en réponse à une détermination qu'une mesure d'une fiabilité de communication de la liaison de communication entre l'élément de communication et l'au moins un module électronique de puissance est inférieure à une valeur de seuil.

2. Elément de communication selon la revendication 1, dans lequel le système de communication comprend au moins une unité de commande (30) configurée pour générer au moins un signal de commande destiné à l'au moins un module électronique de puissance et/ou traiter au moins un message en provenance de ce dernier, l'au moins une unité de commande comprenant un module de communication (31) configuré pour émettre l'au moins un signal de commande et/ou recevoir l'au moins un message ;
dans lequel l'élément de communication comprend un module de communication (64-66) configuré pour recevoir l'au moins un signal de commande émis par l'au moins une unité de commande, dans lequel l'élément de communication est configuré pour transmettre l'au moins un signal de commande reçu à l'au moins un module électronique de puissance et/ou recevoir l'au moins un message à partir de l'au moins un module électronique de puissance au moyen de la pluralité d'antennes de l'élément de communication conformément à l'au moins un procédé de formation de faisceau.

3. Elément de communication selon la revendication 2, dans lequel le module de communication de l'élément de communication comporte ou est constitué par la pluralité d'antennes et le processeur, la pluralité d'antennes étant configurée pour recevoir l'au moins un signal de commande émis par l'au moins une unité de commande.

4. Elément de communication selon l'une quelconque des revendications 1 à 3, dans lequel l'élément de communication est configuré pour émettre de façon répétée un signal d'étalonnage à destination de l'au moins un module électronique de puissance au moyen de la pluralité d'antennes conformément à l'au moins un procédé de formation de faisceau utilisant l'au moins un paramètre de formation de faisceau réglé, et en réponse au signal d'étalonnage émis, recevoir un signal de réponse d'étalonnage à partir de l'au moins un module électronique de puissance au moyen du module de communication, le signal de réponse d'étalonnage comportant une mesure de qualité de la liaison de communication entre l'élément de communication et l'au moins un module électronique de puissance, et régler l'au moins un paramètre de formation de faisceau sur la base du signal de réponse d'étalonnage, jusqu'à ce qu'une différence entre la mesure de qualité incluse dans le signal de réponse d'étalonnage et la mesure de qualité de la liaison de communication incluse dans le signal de réponse d'étalonnage précédemment reçu soit inférieure à une valeur de seuil.

5. Elément de communication selon l'une quelconque des revendications 1 à 4, dans lequel le signal de réponse d'étalonnage comporte au moins une mesure de la force de signal reçu au niveau de l'au moins un module électronique de puissance, ou un taux d'erreurs de la liaison de communication entre l'élément de communication et l'au moins un module électronique de puissance.

6. Elément de communication selon l'une quelconque des revendications 1 à 5, dans lequel l'au moins un paramètre de formation de faisceau comprend au moins l'au moins un poids d'antenne de la pluralité d'antennes, une fréquence de la liaison de communication entre l'élément de communication et l'au moins un module électronique de puissance, et/ou une largeur de bande de la liaison de communication entre l'élément de communication et l'au moins un module électronique de puissance.

7. Elément de communication selon l'une quelconque des revendications 1 à 6, l'élément de communication étant configuré pour exécuter le processus d'étalonnage pour régler l'au moins un paramètre de formation de faisceau avant l'émission de l'au moins un signal de commande à destination de l'au moins un module électronique de puissance et/ou réception de l'au moins un message à partir de ce dernier au moyen de la pluralité d'antennes conformément à l'au moins un procédé de formation de faisceau.

8. Elément de communication selon l'une quelconque des revendications 1 à 7, dans lequel l'élément de communication est configuré pour déterminer continûment ou continuellement la mesure d'une fiabilité de communication de la liaison de communication entre l'élément de communication et l'au moins un module électronique de puissance et comparer la mesure à la valeur de seuil.

9. Elément de communication selon l'une quelconque des revendications 1 à 8, dans lequel la mesure d'une fiabilité de communication de la liaison de communication entre l'élément de communication et l'au moins un module électronique de puissance comporte au moins une latence de la liaison de communication et/ou un taux d'erreur de la liaison de communication.

10. Elément de communication selon l'une quelconque des revendications 1 à 9, dans lequel le système de communication sert à émettre au moins un signal de commande à destination d'une pluralité de modules électroniques de puissance (11-19) et/ou à recevoir au moins un message de ces derniers, dans lequel l'au moins un module électronique de puissance est l'un de la pluralité de modules électroniques de puissance, et dans lequel l'au moins un paramètre de formation de faisceau réglé obtenu par le processus d'étalonnage de l'élément de communication pour émettre l'au moins un signal de commande à destination de l'au moins un module électronique de puissance et/ou recevoir l'au moins un message de ce dernier au moyen de la pluralité d'antennes conformément à l'au moins un procédé de formation de faisceau, utilisant l'au moins un paramètre de formation de faisceau, est également utilisé pour l'élément de communication pour émettre l'au moins un signal de commande à destination d'un ou plusieurs autres modules de la pluralité de modules électroniques de puissance et/ou recevoir l'au moins un message de ces derniers au moyen de la pluralité d'antennes conformément à l'au moins un procédé de formation de faisceau.

11. Elément de communication selon la revendication 10, dans lequel l'au moins un paramètre de formation de faisceau réglé obtenu par le processus d'étalonnage est également utilisé pour l'élément de communication pour émettre l'au moins un signal de commande à destination d'un ou plusieurs autres modules de la pluralité de modules électroniques de puissance et/ou recevoir l'au moins un message de ces derniers au moyen de la pluralité d'antennes conformément à l'au moins un procédé de formation de faisceau uniquement à condition que les un ou plusieurs autres modules de la pluralité de modules électroniques de puissance se trouvent en-deçà d'une distance sélectionnée de l'au moins un module électronique de puissance.

12. Système de communication (100) comprenant :
au moins un module électronique de puissance (11-19), l'au moins un module électronique de puissance comprenant un module de communication conçu pour une communication sans fil, le module de communication étant configuré pour recevoir et/ou émettre au moins un signal, dans lequel l'au moins un module électronique de puissance est configuré pour recevoir au moins un signal de commande et/ou émettre au moins un message par l'intermédiaire du système de communication ; et
au moins un élément de communication (41-43) comprenant :
une pluralité d'antennes (51-53, 54-56, 57-59) configurée pour la communication sans fil, chaque antenne de la pluralité d'antennes étant configurée pour émettre et/ou recevoir au moins un signal à l'aide d'un poids d'antenne ; et
un processeur (61-63), le processeur étant couplé en communication à chaque antenne de la pluralité d'antennes et configuré pour, pour chaque antenne de la pluralité d'antennes, commander la phase et/ou l'amplitude de l'au moins un signal émis et/ou reçu par l'antenne à l'aide de l'au moins un poids d'antenne conformément à au moins un procédé de formation de faisceau ;
dans lequel l'au moins un élément de communication est configuré pour émettre l'au moins un signal de commande à destination de l'au moins un module électronique de puissance et/ou recevoir l'au moins un message de ce dernier au moyen de la pluralité d'antennes conformément à l'au moins un procédé de formation de faisceau ;
dans lequel l'élément de communication comprend un module de communication (64-66) configuré pour recevoir au moins un signal, et dans lequel l'au moins un procédé de formation de faisceau utilise au moins un paramètre de formation de faisceau, l'au moins un paramètre de formation de faisceau étant variable, dans lequel le processeur est configuré pour, pour chaque antenne de la pluralité d'antennes, commander la phase et/ou l'amplitude de l'au moins un signal émis et/ou reçu par l'antenne à l'aide de l'au moins un poids d'antenne conformément à au moins un procédé de formation de faisceau, utilisant l'au moins un paramètre de formation de faisceau, dans lequel l'élément de communication est configuré pour émettre l'au moins un signal de commande à destination de l'au moins un module électronique de puissance et/ou recevoir l'au moins un message de ce dernier au moyen de la pluralité d'antennes conformément à l'au moins un procédé de formation de faisceau, utilisant l'au moins un paramètre de formation de faisceau, dans lequel l'élément de communication est configuré pour exécuter un processus d'étalonnage pour régler l'au moins un paramètre de formation de faisceau, dans lequel l'élément de communication est configuré pour :
émettre un signal d'étalonnage à destination de l'au moins un module électronique de puissance au moyen de la pluralité d'antennes conformément à l'au moins un procédé de formation de faisceau utilisant l'au moins un paramètre de formation de faisceau ;
en réponse au signal d'étalonnage émis, recevoir un signal de réponse d'étalonnage à partir de l'au moins un module électronique de puissance au moyen du module de communication, le signal de réponse d'étalonnage comportant une mesure de qualité d'une liaison de communication entre l'élément de communication et l'au moins un module électronique de puissance ;
régler l'au moins un paramètre de formation de faisceau en fonction du signal de réponse d'étalonnage ;
dans lequel l'au moins un élément de communication est configuré pour exécuter le processus d'étalonnage pour régler l'au moins un paramètre de formation de faisceau en réponse à une détermination qu'une mesure d'une fiabilité de communication de la liaison de communication entre l'élément de communication et l'au moins un module électronique de puissance est inférieure à une valeur de seuil.

13. Système de communications selon la revendication 12, comprenant en outre :
au moins une unité de commande (30) configurée pour générer au moins un signal de commande destiné à l'au moins un module électronique de puissance et/ou traiter au moins un message en provenance de ce dernier, l'au moins une unité de commande comprenant un module de communication (31) configuré pour émettre l'au moins un signal de commande et/ou recevoir l'au moins un message ;
dans lequel l'au moins un élément de communication comprend un module de communication (64 66) configuré pour recevoir l'au moins un signal de commande émis par l'au moins une unité de commande, dans lequel l'au moins un élément de communication est configuré pour transmettre l'au moins un signal de commande reçu à l'au moins un module électronique de puissance et/ou recevoir l'au moins un message à partir de l'au moins un module électronique de puissance au moyen de la pluralité d'antennes de l'au moins un élément de communication conformément à l'au moins un procédé de formation de faisceau.

14. Système de communications selon la revendication 12 ou 13, dans lequel l'au moins un module électronique de puissance comprend :
une pluralité d'antennes (21-29) configurée pour la communication sans fil, chaque antenne de la pluralité d'antennes étant configurée pour recevoir et/ou émettre au moins un signal à l'aide d'au moins un poids d'antenne ; et
un processeur (81-89), le processeur étant couplé en communication à chaque antenne de la pluralité d'antennes et configuré pour, pour chaque antenne de la pluralité d'antennes, commander la phase et/ou l'amplitude de l'au moins un signal reçu et/ou émis par l'antenne à l'aide de l'au moins un poids d'antenne conformément à au moins un procédé de formation de faisceau de réception ;
dans lequel l'au moins un module électronique de puissance est configuré pour recevoir l'au moins un signal de commande et/ou émettre l'au moins un message au moyen de la pluralité d'antennes de l'au moins un module électronique de puissance conformément à l'au moins un procédé de formation de faisceau de réception.

15. Procédé (200) dans un élément de communication (41-43) destiné à être utilisé en conjonction avec un système de communication (100) pour émettre au moins un signal de commande à destination d'au moins un module électronique de puissance (11-19) et/ou recevoir au moins un message de ce dernier, l'au moins un module électronique de puissance comprenant un module de communication (21-29) conçu pour une communication sans fil et configuré pour recevoir et/ou émettre au moins un signal, l'élément de communication comprenant une pluralité d'antennes (51-53, 54-56, 57-59) conçue pour une communication sans fil, chaque antenne de la pluralité d'antennes étant configurée pour émettre et/ou recevoir au moins un signal à l'aide d'au moins un poids d'antenne, le procédé comprenant :
pour chaque antenne de la pluralité d'antennes, la commande de la phase et/ou de l'amplitude de l'au moins un signal émis et/ou reçu par l'antenne à l'aide de l'au moins un poids d'antenne conformément à au moins un procédé de formation de faisceau (205) ; et
émettre l'au moins un signal de commande à destination de l'au moins un module électronique de puissance et/ou recevoir l'au moins un message de ce dernier au moyen de la pluralité d'antennes conformément à l'au moins un procédé de formation de faisceau (206), dans lequel l'au moins un procédé de formation de faisceau utilise au moins un paramètre de formation de faisceau, l'au moins un paramètre de formation de faisceau étant variable, le procédé comprenant en outre l'exécution d'un processus d'étalonnage pour régler l'au moins un paramètre de formation de faisceau, le procédé comprenant en outre :
pour chaque antenne de la pluralité d'antennes, la commande de la phase et/ou de l'amplitude de l'au moins un signal émis et/ou reçu par l'antenne à l'aide de l'au moins un poids d'antenne conformément à au moins un procédé de formation de faisceau, utilisant l'au moins un paramètre de formation de faisceau,
l'émission d'un signal d'étalonnage à l'au moins un module électronique de puissance au moyen de la pluralité d'antennes conformément à l'au moins un procédé de formation de faisceau utilisant l'au moins un paramètre de formation de faisceau (201) ;
en réponse au signal d'étalonnage émis, la réception d'un signal de réponse d'étalonnage à partir de l'au moins un module électronique de puissance au moyen du module de communication, le signal de réponse d'étalonnage comportant une mesure de qualité d'une liaison de communication entre l'élément de communication et l'au moins un module électronique de puissance (202) ; et
le réglage de l'au moins un paramètre de formation de faisceau en fonction du signal de réponse d'étalonnage (203) ;
dans lequel le processus d'étalonnage pour régler au moins un paramètre de formation de faisceau est exécuté en réponse à une détermination qu'une mesure d'une fiabilité de communication de la liaison de communication entre l'élément de communication et l'au moins un module électronique de puissance est inférieure à une valeur de seuil.

16. Produit-programme informatique comprenant des composantes exécutables par ordinateur pour amener un processeur (61-63) d'un élément de communication (41-43) selon l'une quelconque des revendications 1 à 11 à réaliser un procédé selon la revendication 15 quand les composantes exécutables par ordinateur sont exécutées sur le processeur.

17. Support de mémorisation numérique lisible par ordinateur comprenant un produit-programme informatique comprenant des composantes exécutables par ordinateur pour amener un processeur (61-63) d'un élément de communication (41-43) selon l'une quelconque des revendications 1 à 11 à réaliser un procédé selon la revendication 15 quand les composantes exécutables par ordinateur sont exécutées sur le processeur.
